(19) Europäisches Patentamt / European Patent Office / Office européen des brevets

(11) **EP 4 333 323 A1**

(12) **EUROPEAN PATENT APPLICATION**

(43) Date of publication:
06.03.2024 Bulletin 2024/10

(21) Application number: 23190653.8

(22) Date of filing: 09.08.2023

(51) International Patent Classification (IPC):
*H04B 7/155* (2006.01)      *H04B 7/26* (2006.01)

(52) Cooperative Patent Classification (CPC):
H04B 7/155; H04B 7/2606

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 10.08.2022 JP 2022128257
28.09.2022 JP 2022155493

(71) Applicant: TOYOTA JIDOSHA KABUSHIKI
KAISHA
Toyota-shi, Aichi-ken, 471 8571 (JP)

(72) Inventor: TAKIZAWA, Kenichi
TOKYO 184-8795 (JP)

(74) Representative: Cabinet Beau de Loménie
158, rue de l'Université
75340 Paris Cedex 07 (FR)

(54) **COMMUNICATION SYSTEM, CONTROLLER, AND COMMUNICATION METHOD**

(57)      A communication system includes a first communication station (2, 4), one or more relay stations (3) to be communicable with the first communication station (2, 4), a second communication station (2, 4) to be communicable with the first communication station (2, 4) via any of the relay stations (3) or without via any of the relay stations (3) and a controller (1). The controller (1) determines the relay station (3) serving as an interposition in communications between the first communication station (2, 4) and the second communication station (2, 4) to maximize the communication path capacity between the first communication station and the second communication station under a predetermined constraint condition, the communication path capacity being calculated based on radio wave propagation characteristics between the first communication station (2, 4) and each of the relay stations (3), the characteristics between each of the relay stations (3) and the second communication station (2, 4), and the characteristics between the first communication station (2, 4) and the second communication station (2, 4).

EP 4 333 323 A1

FIG.1

**Description**

BACKGROUND

Technical Field

The present disclosure pertains to a communication system, a controller, and a communication method.

Description of the Related Art

Super low delay communications equal to or shorter than sub-milliseconds are expected in wireless communications exemplified by 5th Generation Mobile Communication System (5G) and equivalences. On the other hand, expansions of cell coverage areas are desired in terms of improving communication network, and hence relay communications via relay stations are effective. Such being the case, a wireless communication method is proposed, by which a terminal station including a fixed station performing the wireless communications operates as the relay station. Further, non-regenerative relay configured not to demodulate and decode is desirable as a relay technology exhibiting small quantity of delay.

[Prior Art Documents]

[Non-Patent Documents]

[Non-Patent Document 1] H. Chen. A. B. Gershman, and S. Shahbazpanahi, "Filter-and-Forward Distributed Beamforming in Relay Networks with Frequency Selective Fading," IEEE Trans. On Signal Processing, (U.S.A.),vol. 58, no. 3, March 2010.
[Non-Patent Document 2] Noguchi, Hayashi, Kaneko, Sakai, "A Single Frequency Full-Duplex Radio Relay Station for Frequency Domain Equalization Systems", Technical Report of the Institute of Electronics, Information and Communication Engineers, vol. SIP2011-109, January 2012.

SUMMARY

However, a plurality of candidates for the relay stations exists as being eligible for the relay stations as the case may be. It is one aspect of the embodiments of the disclosure to control wireless communications by properly selecting relay stations in the wireless communications in which non-regenerative relay is carried out.
One aspect of the disclosed embodiment is illustrated by a communication system. The communication system includes a first communication station, one or more relay stations capable of communicating with the first communication station, a second communication station capable of communicating with the first communication station via any one of the one or more relay stations or without any one of the one or more relay stations, and a controller. The controller calculates a communication path capacity between the first communication station and the second communication station based on a radio wave propagation characteristic between the first communication station and each of the one or more relay stations, a radio wave propagation characteristic between each of the one or more relay stations and the second communication station, and a radio wave propagation characteristic between the first communication station and the second communication station. Then, the controller determines the relay station intervening in the communication between the first communication station and the second communication station so that the calculated communication path capacity becomes maximum under a predetermined constraint condition.
The communication system and the controller are enabled to control the wireless communications by properly selecting the relay stations in the wireless communications in which the non-regenerative relay is carried out.

BRIEF DESCRIPTION OF THE DRAWINGS

FIG. 1 is a diagram illustrating a communication system according to a first embodiment;
FIG. 2 is a diagram illustrating a communication system by way of another example embraced by the first embodiment;
FIG. 3 is a diagram illustrating a configuration of a relay station;
FIG. 4 is a diagram illustrating a configuration of an FIR filter;

FIG. 5 is a diagram illustrating a hardware configuration of a control apparatus;

FIG. 6 is a diagram illustrating a relationship between a cyclic prefix length and a configuration of a delay quantity set by the control apparatus for five relay stations;

FIG. 7 is a sequential flowchart illustrating processing procedures of the communication system;

FIG. 8 is a sequential flowchart illustrating the processing procedures of the communication system;

FIG. 9 is a sequential flowchart illustrating the processing procedures of the communication system;

FIG. 10 is a sequential flowchart illustrating the processing procedures of the communication system;

FIG. 11 is a flowchart illustrating processes for the control apparatus to select the relay station;

FIG. 12 is a diagram illustrating the communication system according to a third embodiment;

FIG. 13 is a diagram illustrating the relationship between the cyclic prefix length and the configuration of the delay quantity set by the control apparatus for five relay stations in the third embodiment;

FIG. 14 is a sequential flowchart illustrating how the processes in FIG. 9 are varied in uplink communications;

FIG. 15 is a sequential flowchart illustrating how the processes in FIG. 10 are varied in the uplink communications.

DESCRIPTION OF THE EMBODIMENTS

A communication system, a control apparatus as an example of a controller, and a communication method according to one embodiment will hereinafter be described with reference to the accompanying drawings. The communication system includes: a first communication station; one or more relay stations each enabled to perform communications with the first communication station; a second communication station enabled to perform the communications with the first communication station via any of the one or more relay stations or without via any of the one or more relay stations; and a control apparatus. The control apparatus calculates a communication path capacity between the first communication station and the second communication station on the basis of radio wave propagation characteristics between the first communication station and each of the one or more relay stations, radio wave propagation characteristics between each of the one or more relay stations and the second communication station, and radio wave propagation characteristics between the first communication station and the second communication station. The control apparatus determines the relay station intervening (serving as the interposition) in the communications between the first communication station and the second communication station to maximize the capacity of the communication path under a predetermined constraint condition.

Herein, a modulation signal in the communications includes a guard interval between a symbol and another symbol, each of the symbol and another symbol corresponds to (delimits) an interval of same bit information. The control apparatus sets a period of propagation delay time of a first signal and a period of propagation delay time of a second signal so as to have values different from each other, in which the propagation delay time of the first signal is propagation time of the first signal reaching the second communication station from the first communication station without via any of the one or more relay stations, and the propagation delay time of the second signal is propagation time of the second signal reaching the second communication station from the first communication station via any of the one or more relay stations. The control apparatus also sets the propagation delay time of the second signal within such a range that delay time of the second signal is not equal to or longer than time of the guard interval.

The controller determines in a sequence, a number of relay stations intervening in the communications based on the following processing. The control apparatus integrates propagation delay quantities defined as periods of propagation time of the second signal between the one or more relay stations and the second communication station in the order of the relay stations determined to intervene in the communications. The control apparatus sets each propagation delay time of the signal via each of the number of intervening relay stations, based on an integrated value of the propagation delay quantities integrated up to the relay station determined immediately before each of the number of relay stations intervening in the communications. The control apparatus determines, from within the one or more relay stations, the number of relay station intervening in the communications between the first communication station and the second communication station, in which a number of the one or more relay stations is set in such a range that the second signal having the set propagation delay time is not delayed equally to or longer than the guard interval time. The predetermined constraint condition is the number of relay stations capable of relaying the second signal within a delay time range not being delayed equally to or longer than the guard interval time. The control apparatus is therefore enabled to maximize the capacity of the communication path by setting the number of the relay stations intervening in relaying and the delay via every relay station within such a limit that the second communication station receives the symbol of the modulation signal with the delay being equal to or shorter than the guard interval. Herein, the first communication station is a base station on a downlink (which is also referred to as a downlink channel) but is a terminal station on an uplink (which is also referred to as an uplink channel). The first communication station may be said to be a transmission station. The second communication station is the terminal station on the downlink but is the base station on the uplink. The second communication station may be said to be a reception station. First and second embodiments, which will hereinafter be described, exemplify processes of determining a combination of relay stations 3-i enabling fast communications when a relay station 3 relays the communications on the downlink. Third and fourth embodiments exemplify processes of determining the combination of the relay stations 3-i enabling the fast communications when the relay station 3 relays the communications on the uplink.

<First Embodiment> (System Configuration)

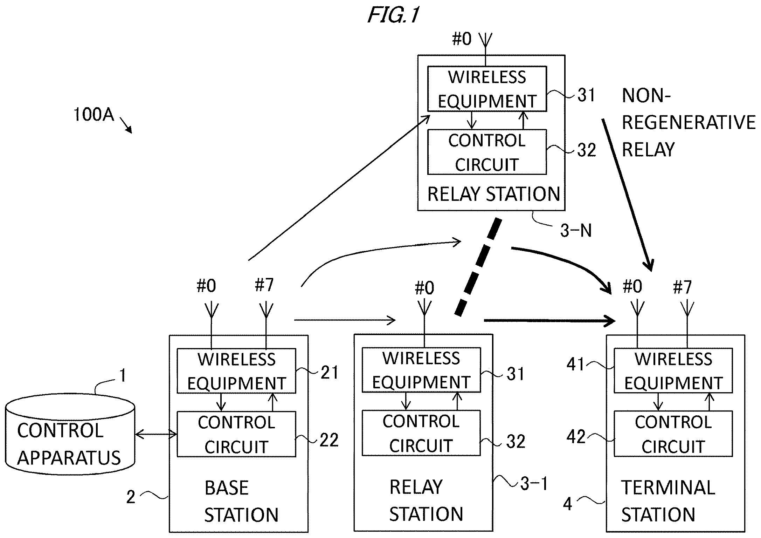

FIG. 1 is a diagram illustrating a communication system 100A according to first embodiment. The communication system 100A includes a control apparatus 1, a base station 2, relay stations 3 (3-1, 3-N), and a terminal station 4. The control apparatus 1 is an apparatus on a core network to which the base station 2 is connected. The control apparatus 1 may also be, however, considered to be the core network itself or a system included by the core network. The core network includes, e.g., an optical fiber network. The control apparatus 1 controls the base station 2, the relay stations 3 and the terminal station 4, thereby providing communication networks to the terminal station 4.

The base station 2 provides a wireless access network to the terminal station 4. An area enabling wireless communications is also called a cell. The base station 2 includes one or more antennas (denoted by, e.g., #0 through #7), wireless equipment 21 connected to the one or more antennas, and a control circuit 22. The control circuit 22 includes, e.g., a processor and a memory. The processor controls, based on a computer program in the memory, the communications with the control apparatus 1 and wireless communications with the relay stations 3 and the terminal station 4.

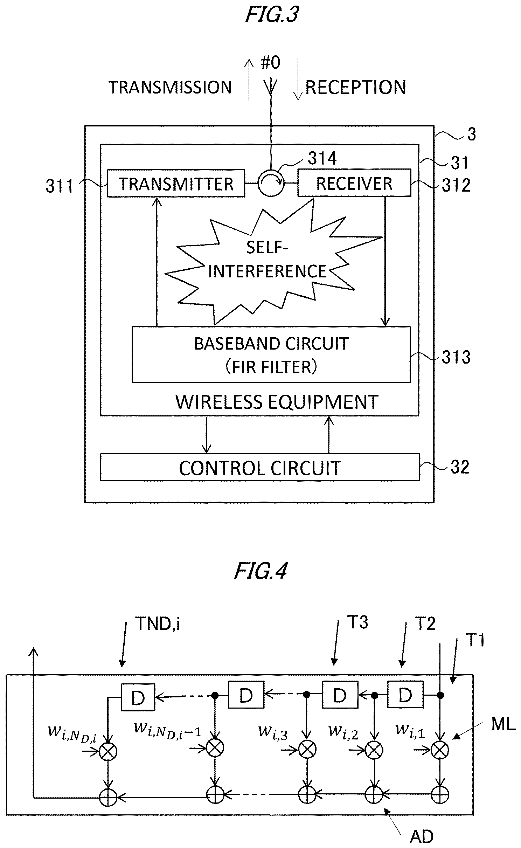

The terminal station 4 is also called a mobile station. The mobile station connects to the wireless access network within a range of the cell provided by the base station 2. On the other hand, the relay station 3 relays the wireless communications between the base station 2 and the terminal station 4. The relay station 3 may include a fixed station with its installed location being fixed and the mobile station. According to the first embodiment, the relay station 3, in both cases of being the fixed station and the mobile station, has a configuration controllable of the delay time in relaying, to be specific, includes a Finite Impulse Response (FIR) filter illustrated in FIG. 4. The control apparatus 1 therefore has, e.g., information indicating whether the fixed station and the mobile station becoming candidates for the relay stations 3 are eligible for the relay stations 3, i.e., whether each of these relay station candidates includes the FIR filter.

When performing the communications with the terminal station 4, the control apparatus 1 selects the one or more relay stations 3 located in the range of the cell provided by the base station 2, and instructs the selected relay stations 3 to relay the wireless communications. The mobile stations located in the range of the cell provided by the base station 2 may therefore be said to be the candidates for the relay stations 3. Note that the relay station serving as the fixed station may also be configured to connect with the base station 2 via a cable outside the cell of the base station 2. In the first embodiment, the multiple relay stations 3 are, when individually distinguished, denoted by attaching branch numbers such as relay station 3-1, ... , 3-N. Herein, the branch number N is an integer indicating the number of candidates for the relay stations 3. The relay stations 3-1 and 3-N are illustrated in FIG. 1. However, the relay station 3-1, ... , 3-N are, when generically named, simply termed the relay stations 3.

The relay station 3 includes, as in the case of the base station 2, the one or more antennas (e.g., #0), wireless equipment 31 connected respectively to the one or more antennas, and a control circuit 32.

The terminal station 4 includes the one or more antennas (e.g., #0 through #7), wireless equipment 41 including parts of circuits, each of the parts connected to the one or more antennas, and a control circuit 42. However, the single wireless equipment 1 may also be mounted with a plurality of antennas. For example, the wireless equipment 41 may simply receive reception signals by selecting the antenna exhibiting a highest level of the reception signal. Similarly, the single wireless equipment 31 in the relay station 3 may also be mounted with the plurality of antennas. The mobile station existing in the cell requests the base station 2 to connect with the wireless access network and is thereby connected to the network, whereby the mobile station operates as the terminal station 4. The in-cell mobile station may request the base station 2 to connect directly with the wireless access network. The mobile station may request the base station 2 to connect with the wireless access network via the mobile station operating as the relay station 3 in the cell or via the fixed station outside or within the cell. The terminal station 4 may be said to be a station enabled to communicate with the base station 2 via any of the one or more relay stations 3 or without via any of the one or more relay stations 3.

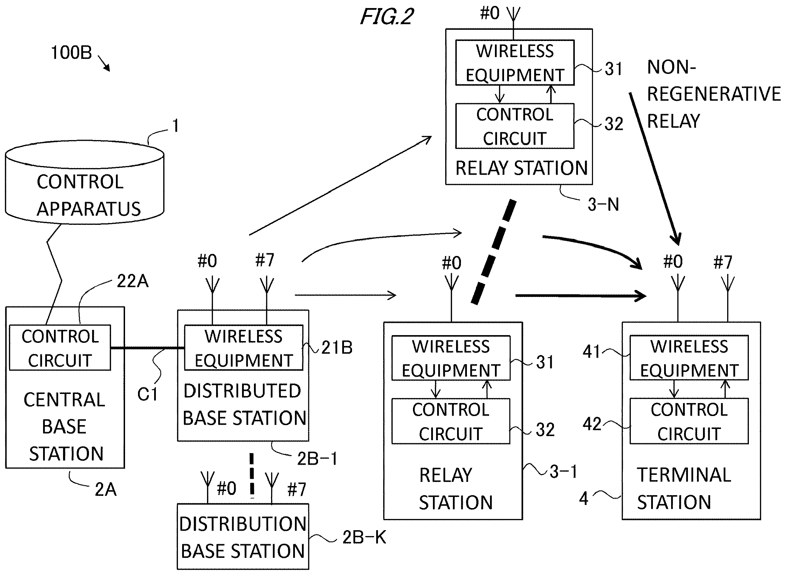

FIG. 2 is a diagram illustrating a communication system 100B given as another example included in the first embodiment. In comparison with the communication system 100A, the communication system 100B includes a central base station 2A and one or more distribution base stations 2B in place of the base station 2. The one or more distribution base stations 2B are, when individually distinguished, denoted by the branch numbers such as the distribution base stations 2B-1, ... 2B-K. herein, the branch number K is an integer indicating the number of the distribution base stations. FIG. 2 illustrates the distribution base stations 2B-1 and 2B-K. However, the distribution base stations 2B-1, ... , 2B-K are, when generically named, simply termed the distribution base stations 2B.

The central base station 2A includes a control circuit 22A. The distribution base station 2B includes a wireless equipment 21B. The control circuit 22A of the central base station 2A is connected via, e.g., an optical fiber C1 or the wireless network to the wireless equipment 21B of the distribution base station 2B. A network topology of the optical fibers C1 connecting the central base station 2A to the plurality of distribution base stations 2B, is not limited. For instance, the network topology of the optical fibers C1 may be a point-to-point topology between nodes, a network topology in which the nodes are further distributed as getting farther from the central base station 2A, a star network topology, or a ring network topology. Limited are none of standards and protocols of the wireless networks when the control circuit 22A of the central base station 2A is connected via the wireless network to the wireless equipment 21B of the distribution base station 2B.

The control circuit 22A includes the processor and the memory as in the case of the control circuit 22 in FIG. 1. The processor controls, based on the computer program in the memory, the communications with the control apparatus 1 and the wireless communications with the relay stations 3 and the terminal station 4. To be specific, the control circuit 22A controls the wireless communications with the relay stations 3 and the terminal station 4 via the wireless equipment 21B of the one or more distribution base stations 2B.

As described above, in FIGS. 1 and 2, each of the base station 2, the distribution base stations 2B and the terminal station 4 includes the plurality of antennas and perform Multiple-Input and Multiple-Output (MIMO) based communications. It does not, however, mean that the communications between the base station 2 and the terminal station 4 are limited to the MIMO-based communications in the first embodiment.

FIG. 3 is a diagram illustrating a configuration of the relay station 3. The wireless equipment 31 of the relay station 3 includes a transmitter 311, a receiver 312, and a baseband circuit 313. The transmitter 311 and the receiver 312 are connected via a circulator 314 to the antenna (#0). Specifically, the transmitter 311, the receiver 312 and the antenna (#0) are connected to three ports of the circulator 314. A transmission signal from the transmitter 311 is input to, e.g., the first port of the circulator 314 and transmitted to the antenna (#0) from the second port. A reception signal received by the antenna (#0) is input to the second port of the circulator 314 and transmitted to the receiver 312 from the third port.

Herein, an electric power difference between the transmission signal and the reception signal is approximately 100 dB. On the other hand, an isolation of the circulator 314 is approximately 30 dB, and part of the transmission signal causes self-interference with the reception signal. The self-interference is suppressed by using a Radio Frequency (RF) analog filter within the receiver 312 in combination with the FIR filter within the baseband circuit 313.

The receiver 312 receives the reception signal from the antenna (#0) via the circulator 314. The receiver 312 includes an orthogonal detection circuit and an analog-to-digital (AD) converter. In the receiver 312, the reception signal is down-converted by the orthogonal detection circuit and is further converted into digital data by the AD converter, thus obtaining a baseband signal. The receiver 312 outputs the obtained baseband signal to the baseband circuit 313.

The baseband circuit 313 includes the FIR filter. The baseband circuit 313 suppresses through the FIR filter, the transmission signal mixed in the reception signal and being to cause the self-interference and causes the reception signal to delay by a predetermined delay time. The baseband circuit 313 outputs the reception signal filtered by the FIR filter to the transmitter 311.

The transmitter 311 includes a digital-to-analog (DA) converter and a modulation circuit. The transmitter 311 DA-converts the reception signal coming from the baseband circuit 313 into an analog signal, and the modulation circuit generates an RF signal. The transmitter 311 transmits the RF signal as a relay signal from the antenna (#0) via the circulator 314.

FIG. 4 is a diagram illustrating a configuration of the FIR filter. The FIR filter includes plural stages of taps $(T1, T2, ..., T_{ND,i})$. The tap T1 weights the input signal with a weight "$w_{i,1}$" by using a multiplier ML without via a delay unit D. In the tap T2, the delay unit D causes the input signal from the tap T1 to delay (by delay time $\tau_D$), and the multiplier ML weights the input signal with a weight "$w_{i,2}$". The same process is applied to the tap T3 and onward. Accordingly, in the tap $T_{ND,I}$ of the last stage, the input signal (the input signal to the FIR filter) to the tap T1 is delayed by delay time $\tau_D \times (N_{D,i}-1)$ and is weighted with a weight "$w_i, N_{D,i}$". The signals processed in the respective taps $(T1, T2, ..., T_{ND,i})$ are added by an adder AD. By dint of the configuration described above, the input signals to the FIR filter are weight-averaged and are, with the interference signals other than the reception signals and noises being eliminated, delayed by the delay time "$\tau_D \times (N_{D,i}-1)$".

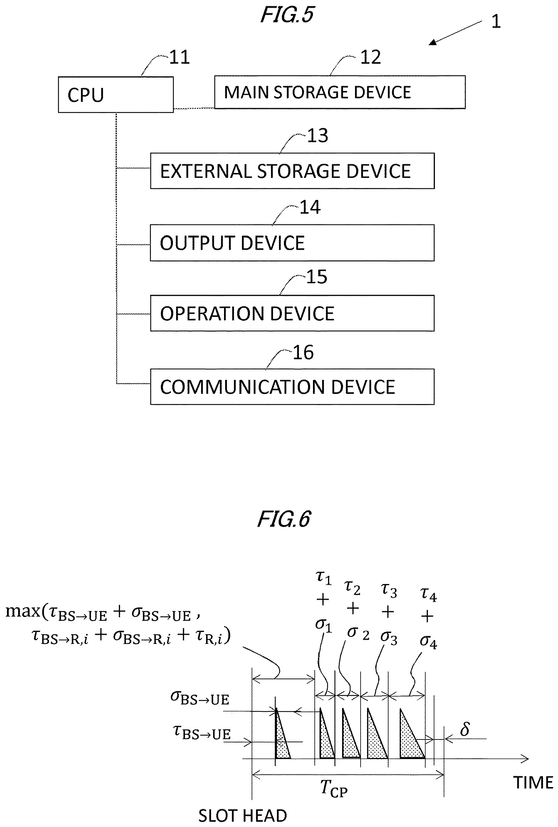

FIG. 5 is a diagram illustrating a hardware configuration of the control apparatus 1. The control apparatus 1 includes a CPU 11, a main storage device 12 and external devices, and executes communication processes and information processes, based on computer programs. The CPU 11 is also called a processor. The CPU 11 may also take a multi-processor configuration without being limited to a single processor. The CPU 11 may also be configured to include a Graphics Processing Unit (GPU), a Digital Signal Processor (DSP) and other equivalents. The CPU 11 may further be configured to cooperate with a hardware circuit exemplified by the Graphics Processing Unit (GPU) and the Digital Signal Processor (DSP). The external devices are exemplified by an external storage device 13, an output device 14, an operation device 15, and a communication device 16.

The CPU 11 executes the computer program deployed in an executable manner on the main storage device 12, and thus provides processes of the control apparatus 1. The main storage device 12 stores the computer programs to be executed by the CPU 11 and data to be processed by the CPU 11. The main storage device 12 is exemplified by a Dynamic Random Access Memory (DRAM), a Static Random Access Memory (SRAM), and a Read Only Memory (ROM). The external storage device 13 is used as, e.g., a storage area auxiliary to the main storage device 12 to thereby store the computer programs to be executed by the CPU 11 and the data to be processed by the CPU 11. The external storage device 13 is exemplified by a Hard Disc Drive (HDD), a Solid State Drive (SSD). The drive device serving as an attachable/detachable storage medium may be connected to the control apparatus 1. The attachable/detachable storage medium is exemplified by a Blu-ray disc, a Digital Versatile Disc (DVD), a Compact Disc (CD), and a flash memory card.

The output device 14 is a display device exemplified by a liquid crystal display, and an electroluminescence panel. The output device 14 may, however, include a loudspeaker and other devices that output voices and sounds. The operation device 15 is exemplified by a touch panel built up by superposing a touch sensor on the display device. The communication device 16 performs the communications with the base station 2 and an external network exemplified by the Internet via the optical fiber. The communication device 16 is, e.g., a gateway connected to the base station 2 and a gateway for the communications with the external network exemplified by the Internet. The communication device 16 may be configured as a single device and may also be configured by combining a plurality of devices.

(Control Method)

According to the first embodiment, the control apparatus 1 selects the one or more relay stations 3-i that relay the communications with the base station 2 and the terminal station 4 from within candidates (i=1~N, N) for the relay stations 3-i. The following are control procedures of selecting the relay stations 3-i and causing the selected relay stations to relay the communications.

(1) Measurements of Radio Wave Propagation Characteristics at Each Station and Calculation of Process Delay at Relay Station

The candidate for each relay station 3-i and the terminal station 4 measure radio wave propagation characteristics between the self-stations and the base station 2, and send the measured characteristics to the control apparatus 1. The candidate for each relay station 3-i measures the radio wave propagation characteristics between the self-station and the terminal station 4, and sends the measured characteristics to the control apparatus 1. The candidate for each relay station 3-i determines a weight "wj" of each tap Tj for the FIR filter to suppress the self-interference. The candidate for each relay station 3-i calculates a process delay "$\tau_{R,i}=(N_{D,i}-1)\times\tau_D$" from a number-of-taps "$N_{D,i}$" of the FIR filter and from the delay time "$\tau_D$". The candidate for each relay station 3-i sends the process delay "$\tau_{R,i}$" to the control apparatus 1.

(2) Selection of Relay Stations 3-i Involving in Relaying

The control apparatus 1 selects the one or more relay stations 3-i (i=1~NR, NR represents the number of relay stations to be selected) so as to maximize the capacity of the communication path extending from the base station 2 to the terminal station 4 from within the relay stations 3-i (i=1~N). The capacity of the communication path is given by the following formula (1A).

[Formulas 1]

$$\max_{a_i}\left\{\mathrm{Cap}(H_{\mathrm{BS\to UE}}) + \mathrm{Cap}\left(\sum_{i=1}^{N_R} a_i\big(H_{\mathrm{BS\to R},i} \ * \ H_{\mathrm{UE\to R},i}\big)\right)\right\} \quad \text{(Formula 1A)}$$

$$\mathrm{Cap}(H) = \log_2\det(I_M + \alpha H * H^H) \quad \text{(Formula 1B)}$$

A coefficient "ai" is given such as "ai=1" when the candidate for the relay station 3-i is selected as the relay station 3. Whereas when not selected, the coefficient "ai" is set such as "ai=0". This coefficient will hereinafter be referred to as a feasibility coefficient "ai". In the first embodiment, the control apparatus 1 selects such a combination of feasibility coefficients "ai" as to maximize the capacity of the communication path of (Formula 1A) from within combinations of feasibility coefficients "ai" (i=1~N, N represents a number of candidates for the relay stations 3), in which "1" or "0" is set in the feasibility coefficient "ai". The control apparatus 1 selects the candidates for the relay stations 3-i exhibiting the feasibility coefficient "ai=1" as the relay stations 3-i (i=1~NR).

A transfer matrix "$H_{\mathrm{BS->UE}}$" represents the radio wave propagation characteristics between the respective antennas (e.g., #0 through #7) of the base station 2 and the respective antennas (e.g., #0 through #7) of the terminal station 4. Respective elements of the transfer matrix are defined as the radio wave propagation characteristics between each pair of the antennas, and the transfer matrix is also referred to as the radio wave propagation characteristics or a transfer matrix of the communication path. A transfer matrix "$H_{BS\text{-}>R,i}$" represents the radio wave propagation characteristics between each of the antennas (e.g., #0 through #7) of the base station 2 and each antenna (e.g., #0) of the candidate for the relay station 3-i. A transfer matrix "$H_{UE\text{-}>R,i}$" represents the radio wave propagation characteristics between each of the antennas (e.g., #0 through #7) of the terminal station 4 and each antenna (e.g., #0) of the candidate for the relay station 3-i. A symbol "Cap" denotes a calculation formula of the capacity of the communication path on the basis of a MIMO transfer matrix. In the (Formula 1A) and (Formula 1B), a symbol "*" represents multiplication of the matrix. In (Formula 1B), "M" denotes a number of antennas; "$I_M$" stands for a unit matrix of M × M; "$H^H$" represents a Hermitian matrix of H; "$\alpha$" denotes a scaling coefficient; and "det(X)" indicates a determinant of the matrix "X". It may be said that the capacity of the communication path is calculated based on the radio wave propagation characteristics "$H_{BS\text{-}>R,i}$" between the base station 2 and each of the one or more relay stations 3-i, the radio wave propagation characteristics "$H_{UE\text{-}>R,i}$" between the terminal station 4 and each of the one or more relay stations 3-i, and the radio wave propagation characteristics "$H_{BS\text{-}>UE}$" between the base station 2 and the terminal station 4.

However, the control apparatus 1 sets a delay quantity "$\Delta i$" of relay waves to be relayed by the relay station 3-i in each of the relay stations 3-i so that a diversity gain is acquired in the reception at the terminal station 4. The delay quantity "$\Delta i$" is the delay time from a head of slots of the relay waves to be relayed in each relay station 3-i. In other words, the delay quantity "$\Delta i$" may also be said to be a period of propagation delay time till reaching the terminal station 4 since each symbol of the modulation signal is relayed by the relay station 3-i, each symbol of the modulation signal transmitted from the base station 2. The control apparatus 1 controls the delay quantity "$\Delta i$" so that the reception signals are transmitted from the base station 2, then relayed at the different relay stations 3-i, 3-j, and reach the terminal station 4 at different timings of the propagation delay time, with these reception signals being received by the terminal station 4 via two channels. Therefore, when the relay station 3-i is selected, in the i-th selected relay station 3-i, there is calculated an integration value "$(\tau1+\sigma1+\tau2+\sigma2...+\tau i\text{-}1+\sigma i\text{-}1)$" to be given by integrating propagation delay quantities "$\tau j(j=1\text{~}i\text{-}1)$" at the 1st-through-(i-1)th selected relay stations. Herein, the propagation delay quantities "$\tau j$" are defined as a period of time required for the propagation from each relay station 3-i to the terminal station 4. A symbol "$\sigma j$" denotes a delay spread. To be specific, the control apparatus 1 integrates the propagation delay quantities of the second signals between the terminal station 4 and each of the one or more relay stations 3-i in the sequence of the selected relay stations 3-i. Note that the integration value of the propagation delay quantity "$\tau j(j=0)$" may simply be set to "0" in the case of the first selected relay station 3-i. Based on a value given by integrating the propagation delay quantities "$\tau j$" and delay spreads "$\sigma j(j=1\text{~}i\text{-}1)$" till the relay station 3-(i-1) selected immediately before the selected relay station 3-i, the control apparatus 1 sets the delay quantity "$\Delta i$" defined as the propagation delay time in the selected relay station 3-i. Specifically, the control apparatus 1 sets the delay quantity "$\Delta i$" given by reflecting, in the integration value of the propagation delay quantities from each of the relay stations 3-i to the terminal station 4, a direct wave propagation delay time "$\tau_{BS\text{-}>UE}$", a propagation delay time "$\tau_{BS\text{-}>R,i}$" from the base station 2 to the relay station 3-i and a process delay "$\tau_{R,i}$" within the relay station 3-i. Concretely, the delay quantity "$\Delta i$" in the relay station 3-i is set by the following formula (2).
[Formula 2]

$$\Delta_i = \max\left(\tau_{\text{BS}\to\text{UE}} + \sigma_{\text{BS}\to\text{UE}}, \tau_{\text{BS}\to\text{R},i} + \sigma_{\text{BS}\to\text{R},i} + \tau_{\text{R},i}\right) + \delta + \sum_{j=1}^{i}\left(\tau_{j-1} + \sigma_{j-1}\right)$$

$$(\text{where } \tau0 = \sigma0 = 0, \delta \text{ is a measurement deviation}) \qquad \text{(Formula 2)}$$

The control apparatus 1 determines a number-of-relay-stations "NR" so that the propagation delay time of the reception signal to be received by the terminal station 4 at the latest timing is shorter than a cyclic prefix length "Tcp" to be set between a symbol and another symbol of the reception signal. Namely, the control apparatus 1 determines the number-of-relay-stations "NR" so as to satisfy a constraint condition of the following (Formula 3).
[Formula 3]

$$\max(\tau_{\text{BS}\to\text{UE}} + \sigma_{\text{BS}\to\text{UE}}, \tau_{\text{BS}\to\text{R},i} + \sigma_{\text{BS}\to\text{R},i} + \tau_{\text{R},i}) + \delta + \sum_{j=1}^{N_R} a_{j-1}\left(\tau_{j-1} + \sigma_{j-1}\right) < T_{CP} \qquad \text{(Formula 3)}$$

FIG. 6 is a diagram illustrating a relationship between the cyclic prefix length "Tcp" and a configuration of the

delay quantity "$\Delta i$" set by the control apparatus 1 for the five relay stations 3-i($i=1\sim5$). A first term of the delay quantity "$\Delta i$" in the (Formula 2) includes a function max(). Selected as the function max() is the larger of a period of time "$\tau_{BS\text{-}>UE}+\sigma_{BS\text{-}>UE}$" (propagation delay time) required for the propagation of the direct waves reaching the terminal station 4 from the base station 2, and a propagation delay time "$\tau_{BS\text{-}>R,i}+\sigma_{BS\text{-}>R,i}+\tau_{R,i}$" till the relay waves reach the relay station 3-i from the base station 2 and are processed by the FIR filter in comparison with each other. Herein, "$\tau_{BS\text{-}>UE}$" is the time (propagation delay time) required for the propagation of the direct waves, and "$\sigma_{BS\text{-}>UE}$" is a delay spread thereof. Note that the delay spread is a time length till an arrival of reflection waves (which may be also termed an echo) against the direct waves, and is measured by using, e.g., a reference signal according to the first embodiment. Further, "$\tau_{BS\text{-}>R,i}$" is the time required for the propagation to the relay station 3-i from the base station 2, and "$\sigma_{BS\text{-}>R,i}$" is the delay spread thereof. Furthermore, "$\tau_{R,i}$" a process delay when the relay waves are processed for suppressing the self-interference by the FIR filter in the relay station 3-i.

In the second term, "$\delta$" is a measurement deviation. The measurement deviation "$\delta$" is a deviation of clock possessed by each station. The first embodiment is based on such a premise that slot timings are, e.g., synchronized among all of the stations. In fact, however, a timing deviation is caused to some extent in every station. Attained is the control not to exceed the cyclic prefix length "Tcp" defined as an allowable delay time in a manner that the calculation of the delay time includes the measurement deviation "$\delta$" taking the above station-by-station deviation into consideration. Note that a value of the measurement deviation "$\delta$" is not the worst value of the clock deviation when considering the single station. In other words, accumulation of the deviations through relaying is taken into account, and the value of the measurement deviation "$\delta$" is set based on the number of relaying stages. A third term indicates a value given by integrating the selected 0th through (i-1)th propagation delay quantities "$\tau_{j\text{-}1}(j=1\sim i)$".

In FIG. 6, it is specified that the delay quantity "$\Delta i$" calculated in the (Formula 2) and set in each relay station 3-i is less than the cyclic prefix length "Tcp". Namely, it follows that the constraint condition is satisfied also in the relay stations 3-i corresponding to the maximum number-of-relay-stations "NR" of the relay stations 3-i as in the (Formula 3). Herein, the cyclic prefix is one example of the guard interval set between the symbol and another symbol, which symbols delimit an interval of the same bit information in the modulation signal. Namely, each of the symbol and another symbol correspond to an interval of same bit information. The direct wave is one example of a first signal, and the relay wave is one example of a second signal. The control apparatus 1 sets the delay quantity "$\Delta i$" so that a value of the propagation delay time of the first signal is different from a value of the propagation delay time of the second signal in accordance with the (Formula 2). As in FIG. 6 and the (Formula 3), it may be said that the control apparatus 1 sets the propagation delay time in the relay station 3-i intervening in the communications between the base station 2 and the terminal station 4 within such a range that the second signal is not delayed equally to or longer than the guard interval time. It may also be said that the control apparatus 1 selects the relay stations 3-i intervening in the communications between the base station 2 and the terminal station 4 in the sequence of being selected from within the one or more relay stations 3, with the number-of-relay-stations being set within such a range that the second signal is not delayed equally to or longer than the guard interval time due to the propagation delay time.

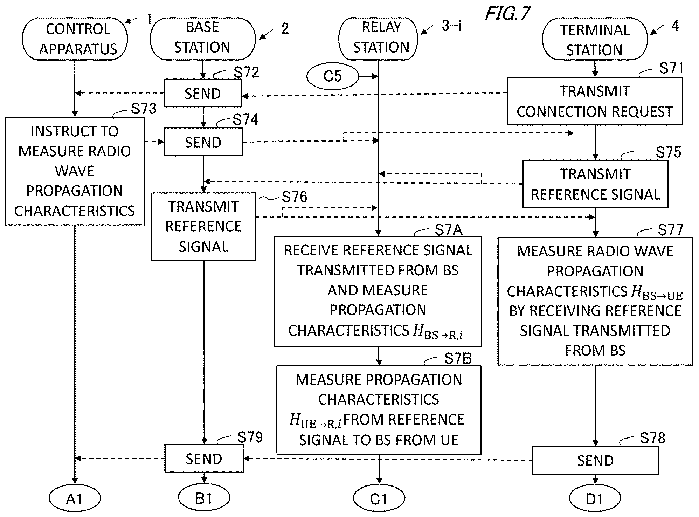

FIGS. 7 through 10 are sequence diagrams illustrating processing procedures of the communication system 100A. FIGS. 7 through 10 include processing sequences of the control apparatus 1, the base station 2, the candidates for the relay stations 3-i and the terminal station 4. Note that a communication system 100B separates the base station 2 into the central base station 2A and one or more distribution base stations 2B. Processes of a control circuit 22A of the central base station 2A are, however, the same as those in FIGS. 7 through 10. Note that the candidates for the relay stations 3-i actually operate as the relay stations 3-i when selected by the control apparatus 1.

In these processes, to start with, in FIG. 7, the terminal station 4 desiring for the connection to, e.g., a MIMO-based wireless access network sends a request to the control apparatus 1 (S71). The request is sent via the base station 2 to the control apparatus 1 (S72). The control apparatus 1 instructs the base station 2, the terminal station 4 and the candidates for the relay stations 3-i via the base station 2 to measure the radio wave propagation characteristics in order to evaluate the radio wave propagation characteristics (S73, S74). The base station 2 and the terminal station 4 transmit the reference signals, e.g., on an every-wireless-frame basis at a predetermined cycle (S75, S76).

The terminal station 4 receives the reference signals transmitted from the base station 2, and measures the radio wave propagation characteristics "$H_{BS\text{-}>UE}$" (S77), and sends the measured radio wave propagation characteristics to the control apparatus 1 (S78, S79).

The candidates for the relay stations 3-i measure the radio wave propagation characteristics "$H_{BS\text{-}>R,i}$" from the same reference signals (S7A) . The candidates for the relay stations 3-i further measure the radio wave propagation characteristics "$H_{UE\text{-}>R,i}$" from the reference signals on control channels, which are transmitted to the base station 2 from the terminal station 4 (S7B).

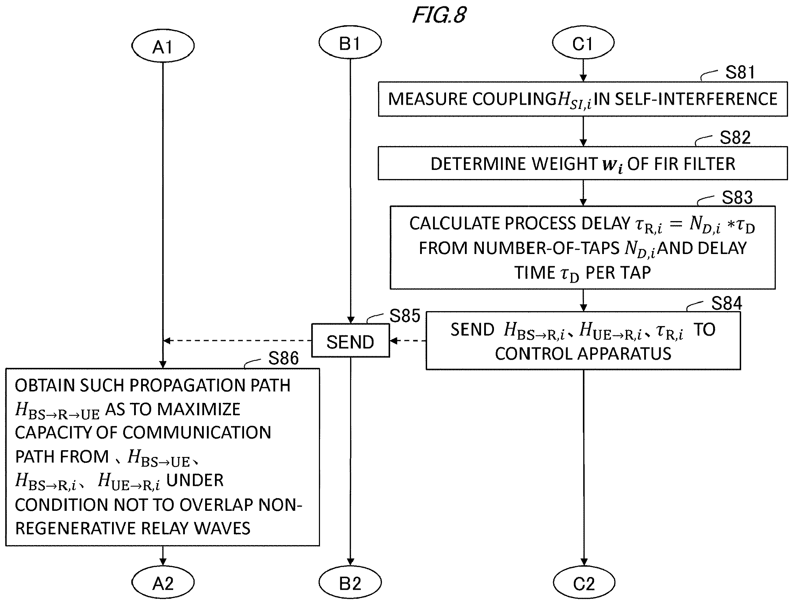

The description continues with reference to FIG. 8. FIG. 7 is continuous to FIG. 8 with the symbols A1 - C1. The candidates for the relay stations 3-i receive the reference signals on the control channels, which are to be transmitted to the base station 2 from the candidates themselves, and measure coupling "$H_{SI,i}$" in the self-interference between the transmission and the reception (S81). The control circuit 32 of each of the candidates for the relay stations 3-i determines, based on the coupling "$H_{SI,i}$", a FIR filter weight "wi" for suppressing the self-interference (S82). The candidate for the relay station 3-i calculates a process delay "$\tau_{R,i}=(N_{D,i}-1)^*\tau_D$" for suppressing the self-interference from a number-of-taps "$N_{D,i}$" and a delay time "$\tau_D$" per tap (S83). Herein, the symbol "*" represents multiplication. The candidate for the relay station 3-i sends the radio wave propagation characteristics "$H_{BS->R,i}$", "$H_{UE->R,i}$" and the process delay "$\tau_{R,i}$" to the control apparatus 1 via the base station 2 (S84, S85). The number-of-taps "$N_{D,i}$" is determined aiming at a value that exceeds approximately a number of taps (= delay spread of self-interference [sec]/sampling cycle of baseband waveform[sec]) necessary for eliminating the self-interference. However, the process delay gets longer as the number of reception taps gets larger, and it therefore follows that the number of taps is restricted by allowable maximum delay time.

The control apparatus 1 obtains such a propagation path "$H_{BS->R->UE}$" as to maximize the capacity of the communication path (refer to (Formula 1A)) from the radio wave propagation characteristics "$H_{BS->UE}, H_{BS->R,i}, H_{UE->R,i}$". However, the control apparatus 1 arranges not to overlap respective non-regenerative relay waves reaching the terminal station 4 from the candidates for the different relay stations 3-i by using the process delay "$\tau_{R,i}$" and the propagation delay quantity "$\tau_i$" from the relay station 3-i to the terminal station 4. To be specific, the control apparatus 1 selects the feasibility coefficient "ai" and the delay quantity "$\Delta i$" per candidate for the relay station 3-i in accordance with the (Formula 1A) and (Formula 2) (S86).

In the first embodiment, the control apparatus 1, when determining the value of the feasibility coefficient "ai" for selecting the relay station 3-i, calculates the capacity of the communication path by setting any of "0" and "1" with respect to the feasibility coefficients "ai" corresponding to all of the relay stations 3-i(i=1~N) in accordance with the (Formula 1A). Herein, "N" represents a number of candidates for the relay stations 3. In other words, the control apparatus 1 enumerates the combinations of the candidates for the relay stations 3-i, which satisfy the (Formula 3) in all of the combinations of the candidates for the relay stations 3-i, and determines such a combination of the candidates for the relay stations 3-i as to maximize the capacity of the communication path in the (Formula 1A) from the enumerated combinations. (Formula 1A) is one example of the predetermined constraint condition. To be specific, it may be said that in the process of S86, the control apparatus 1 determines the relay station 3-i intervening in the communications between the base station 2 and the terminal station 4 so as to maximize the capacity of the communication path under the constraint condition between the base station 2 and the terminal station 4. It may also be said that in this process, the control apparatus 1 calculates the capacity of the communication path by changing the combinations of the relay stations 3-i intervening between the base station 2 and the terminal station 4 in the one or more relay stations 3-i. The control apparatus 1 may be said to set the delay quantity "$\Delta i$" defined as the propagation delay time in the relay station 3-i intervening in the communications between the base station 2 and the terminal station 4 within such a range that the relay waves are not delayed equally to or longer than the time of the guard interval under the constraint condition of (Formula 3). The control apparatus 1 may further be said to determine the relay station intervening in the communications between the base station 2 and the terminal station 4 from within the one or more relay stations with the number of the relay stations being set within such a range that the relay waves serving as the second signals are not delayed equally to or longer than the time of the guard interval under the constraint condition of (Formula 3).

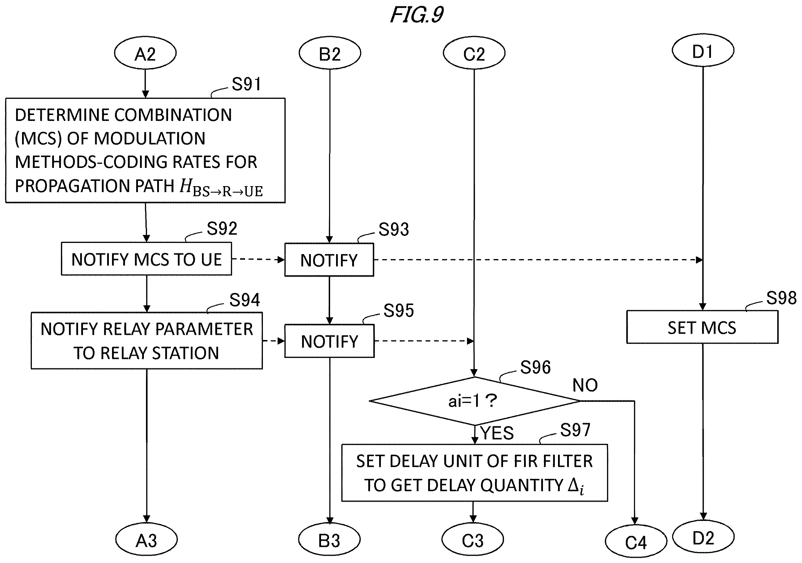

The description continues with reference to FIG. 9. FIG. 8 is continuous to FIG. 9 with the symbols A2 - C2, and FIG. 7 is continued by the symbol D1 to FIG. 9. The control apparatus 1 determines Modulation and channel Coding Scheme (MCS) defined as a combination of modulation methods-coding rates for the obtained propagation path "$H_{BS->R->UE}$" (S91), and notify the terminal station 4 of the determined MCS via the control channel (S92, S93). The terminal station 4 sets a control parameter upon receiving the MCS (S98). As a result, the terminal station 4 , based on the received MCS, e.g., demodulates and decodes the data signals of the downlink channel, and generates data signals of the uplink channel by coding and modulating the data signals of the uplink channel. The control apparatus 1 notifies, to the candidates for the relay stations 3-i, the delay quantity "$\Delta i$" as a relay parameter at the transmission time when the relay feasibility coefficient "ai" indicates "feasible" (S94, S95).

The control circuit 32 of the relay station 3-i determines whether the feasibility coefficient "ai" is ai=1 (S96). When the feasibility coefficient "ai" is ai=1 (YES in S96), the control circuit 32 sets to increase the number of the delay units D of the FIR filter by a corresponding number so that the propagation delay time gets equivalent to the delay quantity "$\Delta i$" in accordance with the (Formula 2), in which the propagation delay time is the time for which the signal relayed by the relay station 3-i is propagated to the terminal station 4 from the base station 2 (S97).

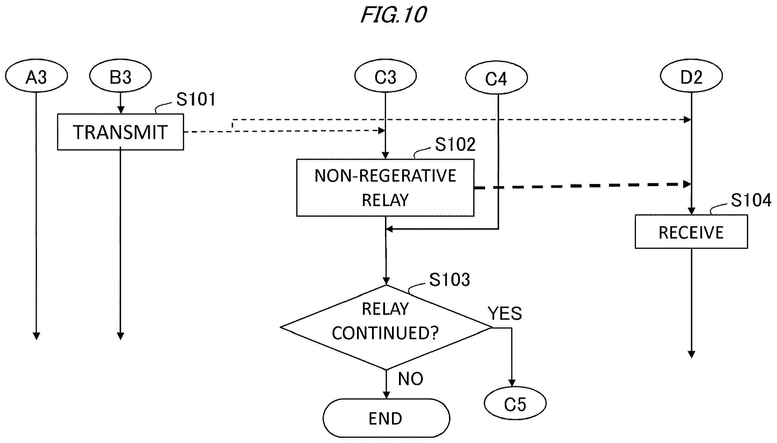

The description continues with reference to FIG. 10. FIG. 9 is continuous to FIG. 10 with the symbols A3 through C4 and D2. Subsequent to the process in S97 of FIG. 9, the relay station 3-i performs non-regenerative relay for the terminal station 4 (S102). To be specific, the relay station 3-i receives the transmission signal transmitted by the base station 2 to the terminal station 4 in process S101, and non-regenerative-relays the transmission signal within the same wireless frame. Whereas when the feasibility coefficient "ai" is ai=0 (NO in S96), the relay station 3-i does not perform non-regenerative-relaying. The relay station 3-i determines whether the non-regenerative relay continues (S103). When the non-regenerative relay continues, the relay station 3-i loops the processing back to C5 in FIG. 7. Whereas when the non-regenerative relay does not continue, the relay station 3-i finishes the processing. The processes from C5 to next C5 are repeatedly carried out, e.g., on every-wireless-frame basis.

The terminal station 4 receives the direct waves transmitted from the base station 2 and the relay waves relayed by the relay station 3-i (S104). Hereat, the symbol of the reception signal is not delayed equally to or longer than the cyclic prefix, and hence the terminal station 4 obtains a diversity gain from the direct waves and the relay waves relayed by the relay station 3-i, thereby enabling the high-quality reception.

As discussed above, according to the first embodiment, the control apparatus 1 acquires the radio wave propagation characteristics "H" between the base station 2 and each of the one or more relay stations 3-i, between each of the one or more relay stations 3-i and the terminal station 4, and between the base station 2 and the terminal station 4. The control apparatus 1 calculates, based on these radio wave propagation characteristics "H", the capacity of the communication path between the base station 2 and the terminal station 4. The control apparatus 1 determines the relay station 3-i intervening in the communications with the terminal station 4 so as to maximize the capacity of the communication path from within the one or more relay stations 3-i(i=1~N). The control apparatus 1 is thereby enabled to determine such a combination of the relay stations 3-i as to make the fast communications possible between the base station 2 and the terminal station 4.

Herein, for example, when determining the relay station 3-i intervening in the communications between the base station 2 and the terminal station 4, the control apparatus 1 calculates the capacity of the communication path per combination of the relay stations 3-i by changing the relay station 3-i intervening. The control apparatus 1 is therefore enabled to properly determine such a combination of the relay stations 3-i as to enable the fast communications between the base station 2 and the terminal station 4.

The modulation signal of the communications in the communication systems 100A, 100B contains the cyclic prefix exemplified as the guard interval between the symbol and another symbol, which corresponds to the interval of the same bit information. The signals reaching the terminal station 4 without via any of the one or more relay stations 3-i from the base station 2 are the direct waves and may be said to be the first signals. The signals reaching the terminal station 4 via the relay station 3-i intervening in the communications between the base station 2 and the terminal station 4 are the relay waves and may be said to be the second signals. The control apparatus 1 controls so that the propagation delay time "$\tau_{BS->UE}+\sigma_{BS->UE}$" of the first signal (direct wave) takes a value different from a value of the delay quantity "$\Delta i$" from the slot head, which is defined as the propagation delay time of the second signal (relay wave) from the base station 2 to the terminal station 4. The control apparatus 1 sets the delay quantity "$\Delta i$" from the slot head in the relay station 3-i intervening in the communications between the base station 2 and the terminal station 4 within such a range that the second signal is not delayed equally to or longer than the guard interval. Each relay station 3-i intervening in the communications between the base station 2 and the terminal station 4 carries out the non-regenerative relay so that the second signal reaches the terminal station 4 from the base station 2 in accordance with the above-set delay quantity "$\Delta i$" from the slot head. The control apparatus 1 is therefore enabled to maximize the capacity of the communication path under the constraint condition of not causing the interference among the symbols in the transmission signals by combining the relay stations 3-i performing the non-regenerative relay. As in FIG. 1 and FIG. 2, when the base station 2 or the terminal station 4 performs the MIMO-based communications using the plurality of antennas, the terminal station 4 is able to ensure the diversity gain.

The control apparatus 1 integrates the propagation delay quantities "$\tau_i$" from the relay stations 3-i to the terminal station 4 in the sequence of the relay stations 3-i determined in the process described above. The control apparatus 1 sets the delay quantity "$\Delta i$" defined as the propagation delay time of the relay waves via each the relay station 3-i on the basis of the value integrated up to the relay station determined immediately before each relay station 3-i. The control apparatus 1 determines the relay station 3-i intervening in the communications between the base station 2 and the terminal station 4 from the one or more relay stations 3 with the number of the relay stations within such a range that the relay waves are not delayed equally to or longer than the guard interval time due to the set delay quantity "$\Delta i$". Hence, the base station 2 and the terminal station 4 are enabled to perform the communications in a way that maximize the capacity of the communication path between the terminal station 4 and the base station 2 under the constraint condition of not causing the interference among the symbols in the transmission signals by combining the relay stations 3-i each carrying out the non-regenerative relay.

The control apparatus 1 obtains, via the base station 2, the radio wave propagation characteristics measured based on the reference signals transmitted from the base station 2 and received by the terminal station 4 without via any of the one or more relay stations 3-i on every-wireless-frame basis. The control apparatus 1 obtains, via the base station 2, the radio wave propagation characteristics measured based on the reference signals transmitted from the base station 2 and received by the one or more relay stations 3-i. The control apparatus 1 obtains, via the base station 2, the radio wave propagation characteristics measured based on the reference signals transmitted from the terminal station 4 and received by the one or more relay stations 3-i. The control apparatus 1 determines the relay station 3-i intervening in the communications between the base station 2 and the terminal station 4. Accordingly, the control apparatus 1 is enabled to determine the relay station 3-i intervening in the communications between the base station 2 and the terminal station 4 by properly acquiring a status of the communication path per wireless frame.

<Second Embodiment>

In the first embodiment, when determining the value of the feasibility coefficient "ai" for selecting the relay station 3-i in accordance with (Formula 1A), the control apparatus 1 sets "0" or "1" in the feasibility coefficients "ai" corresponding to all of the relay stations 3-i(i=1~N), and thus calculates the capacity of the communication path. In other words, the control apparatus 1 calculates the capacities for all of the combinations of the relay stations 3-i by sequentially changing the relay stations 3-i intervening in the communications between the base station 2 and the terminal station 4.

In a second embodiment, when selecting the relay stations 3-i, the control apparatus 1 calculates degrees of priority and selects the relay stations 3-i according to the calculated degrees of priority. In the second embodiment, other than the process that the control apparatus 1 selects the relay stations 3-i according to the degrees of priority, the processes and the configurations of the communication systems 100A, 100B in the second embodiment are the same as those in the first embodiment. Such being the case, the descriptions of the processes and the configurations, which are common to those in the first embodiment, are omitted. Namely, the processes and the configurations other than the process of selecting the relay stations 3-i in the first embodiment are applied intactly to the second embodiment.

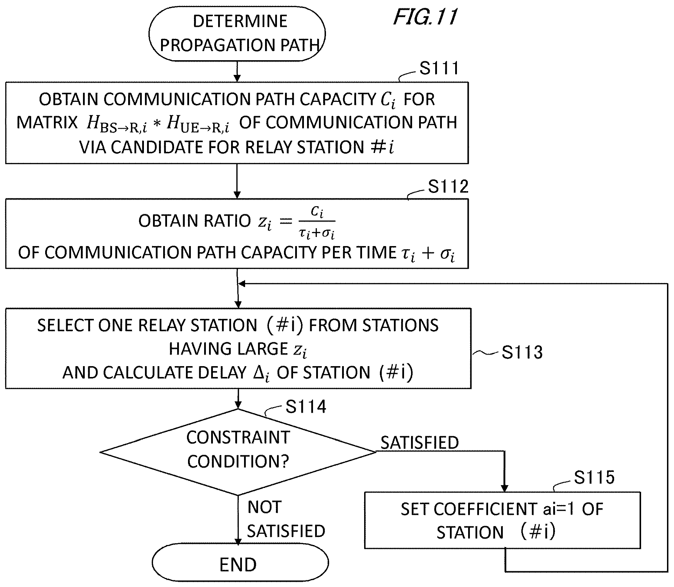

FIG. 11 is flowchart illustrating the process that the control apparatus 1 selects the relay station 3-i in the second embodiment. In the process, at first, the control apparatus 1 obtains a communication path capacity "Ci" for the radio wave propagation characteristics "$H_{BS->R,i}*H_{UE->R,i}$" via the candidate for the relay station 3-i (Sill). The symbol "*" represents the multiplication. Next, the control apparatus 1 obtains a ratio "$zi=Ci/(\tau i+\sigma i)$" of the communication path capacity "Ci" per time "$\tau i+\sigma i$" required for the relay via the candidate for the relay station 3-i (S112). The time "$\tau i+\sigma i$" is a sum of a propagation delay quantity "$\tau i$" defined as the signal propagation time from the relay station 3-i to the terminal station 4, and a delay spread "$\sigma i$". The control apparatus 1 goes on selecting the relay station 3-i(i=1,2,...) in the sequence from the larger of the ratio "zi". Then, the control apparatus 1 adds the relay stations 3-i within such a range as to satisfy the constraint condition of (Formula 3) with respect to the relay stations 3-i(i=1,2,...).

More specifically, the control apparatus 1 adds the relay stations 3-i from within the candidates for the relay stations 3-i in the sequence from the larger of the ratio "zi", and calculates the delay quantity "$\Delta i$" (refer to (Formula 2) from the slot head of the relay wave relayed by the station concerned (S113). As stated in the first embodiment, the delay quantity "$\Delta i$" from the slot head is defined as the propagation delay time when the signal is propagated between the base station 2 and the terminal station 4. Next, the control apparatus 1 determines whether the delay quantity "$\Delta i$" from the slot head satisfies the constraint condition of (Formula 3) (S114). When determining that the delay quantity "$\Delta i$" from the slot head satisfies the constraint condition of (Formula 3), the control apparatus 1 sets the feasibility coefficient "ai=1" of the relay station 3-i and selects the relay station 3-i (S115). Thus, the control apparatus 1 goes on selecting the candidates for the relay stations 3-i in the sequence from the larger of the ratio "zi", and finishes the processing just when the delay quantity "$\Delta i$" from the slot head does not satisfy the constraint condition of (Formula 3). The control apparatus 1 thus sets "ai=1" for the selected candidates for the relay stations 3-i and sets "ai=0" for other candidates.

It may therefore be said that the control apparatus 1 selects such a number of the relay stations 3 as to fall within the range that the symbol of the relay wave defined as the second signal is not delayed equally to or longer than the guard interval time due to the delay quantity "$\Delta i$" from the slot head. It may also be said that the control apparatus 1 selects the relay stations 3-i(i=1~NR) intervening in the communications between the base station 2 and the terminal station 4 in the sequence of being from within the one or more relay stations 3-i(i=1~N). Herein, "N" represents the number of the candidates for the relay stations 3, and "NR" denotes the number of the relay stations 3 involving in relaying.

As discussed above, the control apparatus 1 calculates the ratio "zi" of the communication path capacity "Ci" between the base station 2 and the terminal station 4, with the respective relay stations 3-i intervening therein, as against the time "$\tau i+\sigma i$" required for relaying via each of the one or more relay stations 3-i.

The control apparatus 1 selects the relay stations 3 intervening in the communications between the base station 2 and the terminal station 4 by prioritizing the relay stations 3-i having the larger ratio "zi" among the one or more relay stations 3-i. The ratio "zi" may be said to be the communication path capacity per propagation delay quantity up to the terminal station 4 from the relay station 3-i. In other words, according to the second embodiment, the control apparatus 1 is enabled to select the relay stations 3-i capable of increasing the communication path capacity by taking into consideration the propagation delay quantity up to the terminal station 4 from the relay station 3-i. The control apparatus 1 prioritizes the paths having the smaller propagation delay quantity up to the terminal from the relay station 3-i when the communication path capacity is equalized and is thereby enabled to select a much larger number of the relay stations 3-i in accordance with (Formula 3). The control apparatus 1 is enabled to select, based on the ratio "zi", such a combination of the relay stations 3-i as to maximize the capacity of the communication path between the base station 2 and the terminal station 4 properly and within the range to satisfying the constraint condition with less quantity of calculations than by the first embodiment.

<Third Embodiment>

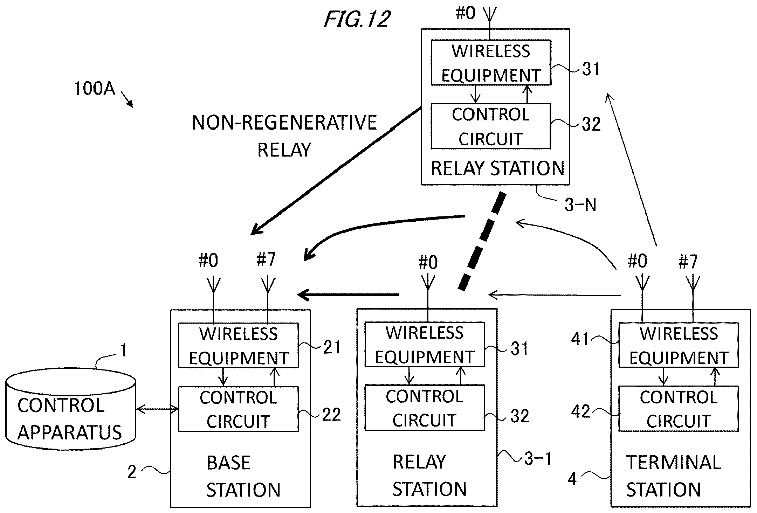

The communication systems 100A, 100B according to a third embodiment will hereinafter be described with reference to FIGS. 12 through 15. The first and second embodiments exemplified the processes of determining such a combination of the relay stations 3-i as to enable the fast communications when the relay stations relay the communications on the downlink. It does not, however, mean that the processes of the communication systems 100A, 100B are limited to those described above.

Specifically, in the communication systems 100A, 100B, unless the antennas used by the respective stations are changed, the premise is Time Division Duplex (TDD) of a time-division-based uplink (also termed an uplink channel) and a time-division-based downlink (also termed a downlink channel). Propagation path characteristics (also referred to as communication path characteristics) may be deemed the same as they are on the uplink and on the downlink. Strictly speaking, the propagation path characteristics may differ depending on changes in ambient environments, which occur due to movements of the terminal station 4 (or relay station 3). However, it may be assumed that the changes in the ambient environments are ignored within the range of the same wireless frame. Hence, it is feasible to calculate a delay quantity "$\Delta i^{UL}$" and the propagation delay time on the uplink in the same manner as on the downlink by use of the propagation path characteristics notified to the base station 2 (or the control apparatus 1) from the relay station 3 and the terminal station 4.

FIG. 12 is diagram illustrating the communication system 100A in the third embodiment. A configuration of the communication system 100A is the same as illustrated in FIG. 1. In the third embodiment, on the uplink, the control apparatus 1 selects the one or more relay stations 3-i that relay the communications between the terminal station 4 and the base station 2 from within the candidates for the relay stations 3-i (i=1~N, N indicates the number of the candidates for the relay stations 3). The selection procedures are the same as those described in relation to the downlink in the first and second embodiments. Note that the processes of the control apparatus 1 selecting the one or more relay stations 3-i relaying the communications between the base station 2 and the terminal station 4 from within the candidates for the relay stations 3-i (i=1~N, N represents the number of the candidates for the relay stations 3) on the downlink, are already described in the first and second embodiments. The configurations of the communication systems 100A, 100B are the same as those already described in the first and second embodiments. Accordingly, the configurations and the processes in FIGS. 1 through 11 are applied intact to the third embodiment.

(1) Measurements of Radio Wave Propagation Characteristics at Each Station and Calculation of Process Delay at Relay Station

The candidate for each relay station 3-i and the terminal station 4 measure the radio wave propagation characteristics between the self-stations and the base station 2, and send the measured characteristics to the control apparatus 1. The candidate for each relay station 3-i measures the radio wave propagation characteristics between the self-station and the terminal station 4, and sends the measured characteristics to the control apparatus 1. The candidate for each relay station 3-i determines the weight "$w_j$" of each tap $T_j$ for the FIR filter to suppress the self-interference. The candidate for each relay station 3-i calculates the process delay "$\tau_{R,i}=(N_{D,i}-1)\times\tau_D$" from the number-of-taps "$N_{D,i}$" of the FIR filter and from the delay time "$\tau_D$". The candidate for each relay station 3-i sends the process delay "$\tau_{R,i}$" to the control apparatus 1. The calculations described above are the same as the measurements of the radio wave propagation characteristics at each station and the calculation of the process delay at the relay station described in the first embodiments.

(2) Selection of Relay Stations 3-i Involving in Relaying

The control apparatus 1 selects the one or more relay stations 3-i (i=1~NR, NR represents the number of relay stations to be selected) so as to maximize the capacity of the communication path extending from the terminal station 4 to the base station 2 from within the relay stations 3-i (i=1~N). The capacity of the communication path is given by the following formula (1A) in the first embodiment.

Similarly to the processing on the downlink in the first embodiment, on the uplink, the control apparatus 1 sets the delay quantity "$\Delta i$" of relay waves to be relayed by the relay station 3-i in each of the relay stations 3-i so that the diversity gain is acquired in the reception at the base station 2. The control apparatus 1 controls the delay quantity so that the reception signals are transmitted from the terminal station 4, then relayed at the different relay stations 3-i, 3-j, and reach the terminal station 4 at different timings of the propagation delay time, with these reception signals being received by the base station 2 via two channels. Therefore, when the relay station 3-i is selected, in the i-th selected relay station 3-i, there is calculated an integration value "$(\tau_{BS\text{-}>R,1}+\sigma_{BS\text{-}>R,1}+\tau_{BS\text{-}>R,2}+\sigma_{BS\text{-}>R,2}\cdots+\tau_{BS\text{-}>R,i\text{-}1}+\sigma_{BS\text{-}>R,i\text{-}1})$" to be given by integrating propagation delay quantities "$\tau_{BS\text{-}>R,j}(j=1~i\text{-}1)$" at the 1st-through-(i-1)th selected relay stations. Herein, the propagation delay quantities "$\tau_{BS\text{-}>R,j}$" are defined as a period of time required for the propagation from each relay station 3-i to the base station 2. A symbol "$\sigma_{BS\text{-}>R,j}$" denotes a delay spread. To be specific, the control apparatus 1 integrates the propagation delay quantities of the second signals between the base station 2 and each of the one or more relay stations 3-i in the sequence of the selected relay stations 3-i. Note that the integration value of the propagation delay quantity "$\tau_{BS\text{-}>R,j}$(j=0) " may simply be set to "0" in the case of the first selected relay station 3-i. Based on a value given by integrating the propagation delay quantities "$\tau_{BS\text{-}>R,j}$" and delay spreads "$\sigma_{BS\text{-}>R,j}$(j=1~i-1)" till the relay station 3-(i-1) selected immediately before the selected relay station 3-i, the control apparatus 1 sets the delay quantity "$\Delta i$". Set is the delay quantity "$\Delta i^{UL}$" given by reflecting, in the integration value of the propagation delay quantities from each of the relay stations 3-i to the base station 2, the direct wave propagation delay time "$\tau_{BS\text{-}>UE}$", the propagation delay time $\tau_{UE\text{-}>R,i}$" from the terminal station 4 to the relay station 3 and the process delay "$\tau_{R,i}$" within the relay station 3-i. Note that the direct wave propagation delay time "$\tau_{UE\text{-}>BS}$" is the same as "$\tau_{BS\text{-}>UE}$". The delay quantity "$\Delta i$" on the uplink channel is denoted by "$\Delta i^{UL}$" explicitly indicating the delay quantity on the uplink channel in the third embodiment. By contrast, the delay quantity "$\Delta i$" in the first embodiment is, when explicitly indicating the delay quantity on the downlink, denoted by "$\Delta i^{DL}$". To be specific, the delay quantity "$\Delta i^{UL}$" at the relay station 3-i is set by the following (Formula 4).

[Formula 4]

$$\Delta_i^{UL} = \max\left(\tau_{BS\to UE} + \sigma_{BS\to UE}, \tau_{UE\to R,i} + \sigma_{UE\to R,i} + \tau_{R,i}\right) + \delta + \sum_{j=1}^{N_R} \left(\tau_{BS\to R,j-1} + \sigma_{BS\to R,j-1}\right)$$

$$(\text{where } \tau_{BS\to R,0} = \sigma_{BS\to R,0} = 0, \; \delta \text{ is the measurement deviation})$$

(Formula 4)

The control apparatus 1 determines the number-of-relay-stations "NR" so that the propagation delay time of the reception signal to be received by the base station 2 at the latest timing is shorter than the cyclic prefix length "Tcp" to be set between a symbol and another symbol of the reception signal. Namely, the control apparatus 1 determines the number-of-relay-stations "NR" so as to satisfy a constraint condition of the following (Formula 5).

[Formula 5]

$$\max\left(\tau_{BS\to UE} + \sigma_{BS\to UE}, \tau_{UE\to R,i} + \sigma_{UE\to R,i} + \tau_{R,i}\right) + \delta + \sum_{j=1}^{N_R} a_{j-1}\left(\tau_{BS\to R,j-1} + \sigma_{BS\to R,j-1}\right) < T_{CP}$$

(Formula 5)

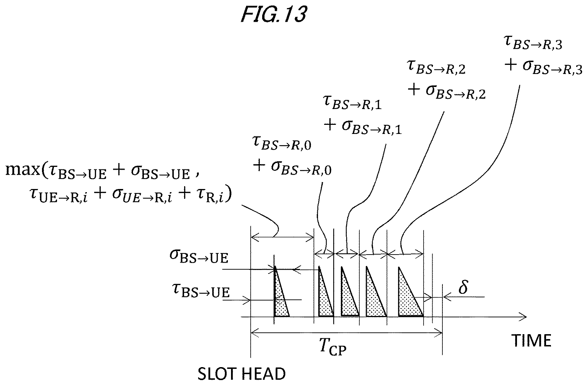

FIG. 13 is a diagram illustrating a relationship between the cyclic prefix length "Tcp" and a configuration of the delay quantity "$\Delta i^{UL}$" set by the control apparatus 1 for the five relay stations 3-i(i=1~5). A first term of the delay quantity "$\Delta i^{UL}$" in the (Formula 4) includes the function max(). Selected as the function max() is the larger of a period of time "$\tau_{BS\text{-}>UE}+\sigma_{BS\text{-}>UE}$" as the propagation delay time of the direct waves reaching the base station 2 from the terminal station 4, and a propagation delay time "$\tau_{UE\text{-}>R,i}+\sigma_{UE\text{-}>R,i}+\tau_{R,i}$" till the relay waves reach the relay station 3-i from the base station 2 and are processed by the FIR filter in comparison with each other. As described in (Formula 2) in the first embodiment, "$\tau_{BS\text{-}>UE}$" is the propagation delay time of the direct waves, and "$\sigma_{BS\text{-}>UE}$" is the delay spread thereof. Further, "$\tau_{UE\text{-}>R,i}$" is the time required for the propagation to the relay station 3-i from the terminal station 4, and "$\sigma_{UE\text{-}>R,i}$" is the delay spread thereof. Furthermore, "$\tau_{R,i}$" is the process delay when the relay waves are processed for suppressing the self-interference by the FIR filter in the relay station 3-i.

In the second term, "$\delta$" is the measurement deviation as already described in the first embodiment. A third term indicates a value given by integrating the selected 0th through (i-1)th propagation delay quantities "$\tau_{BS\text{-}>R,j-1}$(j=1~i)".

In FIG. 13, it is specified that the delay quantity "$\Delta i^{UL}$" calculated in the (Formula 4) and set in each relay station 3-i is less than the cyclic prefix length "Tcp". Namely, it follows that the constraint condition is satisfied also in the relay stations 3-i corresponding to the maximum number-of-relay-stations "NR" of the relay stations 3-i as in the (Formula 5). Herein, the cyclic prefix is one example of the guard interval set between the symbol and another symbol, which symbols delimit the interval of the same bit information in the modulation signal. The direct wave is one example of the first signal, and the relay wave is one example of the second signal. The control apparatus 1 sets the delay quantity so that the value of the propagation delay time of the first signal is different from the value of the propagation delay time of the second signal in accordance with the (Formula 4). As in FIG. 13 and the (Formula 5), it may be said that the control apparatus 1 sets the propagation delay time in the relay station 3-i intervening in the communications between a first communication station C in the third embodiment) and a second communication station (the base station 2 in the third embodiment) within such a range that the second signal is not delayed equally to or longer than the guard interval time.

It may also be said that the control apparatus 1 selects the relay stations 3-i intervening in the communications between the first communication station between a first communication station (the terminal station 4) and the second communication station (the base station 2) in the sequence of being selected from within the one or more relay stations 3, with the number-of-relay-stations being set within such a range that the second signal is not delayed equally to or longer than the guard interval time due to the propagation delay time. Note that on the uplink, as already described, the terminal station 4 is defined as the first communication station (transmission station), while the base station 2 is defined as the second communication station (reception station). On the downlink described in the first embodiment, the base station 2 is the first communication station (transmission station), while the terminal station 4 is the second communication station (reception station).

The processing procedures of the communication system 100A are the same as those already illustrated in FIGS. 7 through 10 according to the first embodiment. However, the process in S86 of FIG. 8 and the process in S91 of FIG. 9 in the first embodiment are changed as follows.

The control apparatus 1 obtains such a propagation path "$H_{UE->R->BS}$" leading to the base station 2 from the terminal station 4 via the relay station 3 as to maximize the capacity of the communication path (refer to (Formula 1A)) from the radio wave propagation characteristics "$H_{BS->UE}$, $H_{BS->R,i}$, $H_{UE->R,i}$". However, the control apparatus 1 determines the delay quantity "$\Delta i^{UL}$" by using the process delay "$\tau_{R,i}$" and the propagation delay quantity "$\tau_{BS->R,i}$" from the relay station 3-i to the base station 2. The delay quantity "$\Delta i^{UL}$" is the propagation delay time set not to overlap the respective non-regenerative relay waves with each other, which reach the base station 2 from the different candidates for the relay stations 3-i, with the propagation delay time being of the signal reaching the second communication station (base station 2) from the first communication station (terminal station 4) via the relay station 3-i. Specifically, the control apparatus 1 selects the feasibility coefficient "ai" and the delay quantity "$\Delta i^{UL}$" per relay station 3-i in accordance with the (Formula 1A) and (Formula 4) (variation of S86).

For example, similarly to the first embodiment, when determining the value of the feasibility coefficient "ai" for selecting the relay station 3-i, the control apparatus 1 calculates the communication path capacity by setting "0" or "1" in "ai" corresponding to all of the relay stations 3-i(i=1~N) in accordance with (Formula 1A). Herein, "N" represents the number of the candidates for the relay stations 3. To be specific, the control apparatus 1 enumerates such combinations of the candidates for the relay stations 3-i as to satisfy (Formula 5) with respect to all of the combinations of the candidates for the relay stations 3-i, and determines such combinations of the candidates for the relay stations 3-i as to maximize the capacity of the communication path based on (Formula 1A) from the enumerated combinations. Hence, (Formula 5) is one example of the predetermined constraint condition. Specifically, in the variant process of S86 according to the third embodiment, it may be said that the control apparatus 1 determine the relay station 3-i intervening in the communications between the first communication station and the second communication station in a way that maximizes the capacity of the communication path between the first communication station (terminal station 4) and the second communication station (base station 2) under the predetermined constraint condition. In the variant process, it may be said that the control apparatus 1 calculates the communication path capacity by changing the combination of the relay stations 3-i intervening in the communications between the first communication station and the second communication station in the one or more relay stations 3-i. The control apparatus 1 is also said to set the delay quantity "$\Delta i^{UL}$" defined as the propagation delay time in the relay station 3-i intervening in the communications between the first communication station and the second communication station within such a range that the relay waves are not delayed equally to or longer than the guard interval time under the constraint condition of (Formula 5). The control apparatus 1 may further be said to determine the relay station intervening in the communications between the first communication station and the second communication station from within the one or more relay stations, with the number-of-relay-stations being set within such a range that the relay waves as the second signals are not delayed equally to or longer than the guard interval time under the constraint condition of (Formula 5).

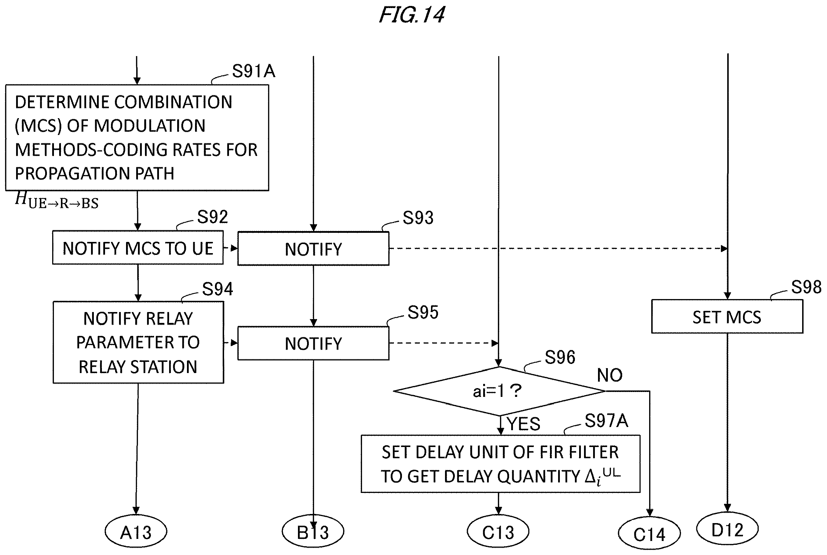

FIG. 14 is a variant version of the flowchart in FIG. 9 from which the communications are varied on the uplink. However, the processes other than the processes in S91A, S97A among the processes of FIG. 14 are the same as those in FIG. 9. In the third embodiment, the process in S91A of FIG. 9 is the calculation executed for the uplink. Such being the case, the process is denoted by S91A in FIG. 14. Specifically, the control apparatus 1 determines the MCS defined as a combination of modulation methods-coding rates for the propagation path "$H_{UE->R->BS}$" obtained in the process varied from S86 (S91A), and notify the terminal station 4 of the determined MCS via the control channel (S92, S93). The processes from S91A onward are the same as those for the downlink, which are described in the first embodiment. Namely, the terminal station 4 sets the control parameter upon receiving the MCS (S98). The control apparatus 1 notifies, to the candidates for the relay stations 3-i, the delay quantity "$\Delta i^{UL}$" as a relay parameter at the transmission time when the relay feasibility coefficient "ai" indicates "feasible" (S94, S95). The delay quantity "$\Delta i^{UL}$" may be said to be the propagation delay time of the second signal as the relay wave.

The control circuit 32 of the relay station 3-i determines whether the feasibility coefficient "ai" is ai=1 (S96). When the feasibility coefficient "ai" is ai=1 (YES in S96), the control circuit 32 sets to increase the number of the delay units D of the FIR filter by a corresponding number so that the propagation delay time gets equivalent to the delay

quantity "$\Delta i^{UL}$" in accordance with the (Formula 2), in which the propagation delay time is the time for which the signal relayed by the relay station 3-i is propagated to the base station 2 from the terminal station 4 (S97A).

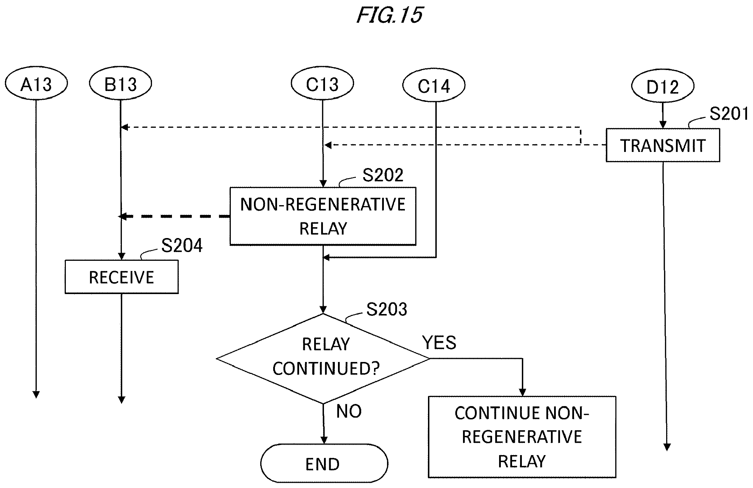

FIG. 15 is a variant version of the flowchart in FIG. 10 from which the communications are varied on the uplink. FIG. 14 is continued to FIG. 15 by the symbols A13 through C14 and D12. Subsequent to setting the MCS in FIG. 14, the terminal station 4 transmits, e.g., data on the uplink (S201). Subsequent to the process in S97A of FIG. 14, the relay station 3-i carries out the non-regenerative relay for the base station 2 (S202). To be specific, the relay station 3-i, upon receiving the transmission signal (corresponding to the second signal) transmitted by the terminal station 4 to the base station 2 in the process S201, carries out the non-regenerative relay the transmission signal (second signal) within the same wireless frame. The process in S202 is one example of carrying out the non-regenerative relay of the second signal according to the set propagation delay time (delay quantity "$\Delta i^{UL}$") of the second signal. When the feasibility coefficient "ai=0" (NO in S96 of FIG. 14), the relay station 3-i does not perform the non-regenerative relay. The relay determines whether the non-regenerative relay continues (S203). When determining that the non-regenerative relay continues, the relay station 3-i continues the non-regenerative relay. Whereas when determining that the non-regenerative relay does not continue, the relay station 3-i finishes the processing.

The base station 2 receives the direct waves transmitted from the terminal station 4 and the relay waves relayed by the relay station 3-i (S204). Hereat, the symbol of the reception signal does not delay equally to or longer than the cyclic prefix, and hence the base station 2 obtains the diversity gain from the direct waves and the relay waves relayed by the relay station 3-i, and is thereby enabled to receive the signals with high quality.

As discussed above, the communication systems 100A, 100B exhibit the same effects as those of the downlink communications also in the first embodiment in the uplink communications according to the third embodiment. For instance, the control apparatus 1 obtains radio wave propagation characteristics "H" between the terminal station 4 as the first communication station and each of the one or more relay stations 3-i, between each of the one or more relay stations 3-i and the base station 2 as the second communication station, and between the terminal station 4 and the base station 2. The control apparatus 1, based on the radio wave propagation characteristics "H", calculates the communication path capacity between the terminal station 4 and the base station 2. The control apparatus 1 determines the relay station 3-i intervening in the communications between the terminal station 4 and the base station 2 from within the one or more relay stations 3-i(i=1~N) so as to maximize the capacity of the communication path. The control apparatus 1 is therefore enabled to determine such a combination of the relay stations 3-i as to make the fast communications possible between the base station 2 and the terminal station 4 also on the uplink.

The control apparatus 1 is enabled to maximize the capacity of the communication path under such a constraint condition as not to cause the interference among the symbols in the transmission signals owing to the combination of the relay stations 3-i performing the non-regenerative relay. As in FIGS. 1 and 2, the base station 2 or the terminal station 4 performs the MIMO-based communications by using the plurality of antennas, in which case the base station 2 is enabled to ensure the diversity gain.

<Fourth Embodiment>

The control apparatus 1 may simply select the relay station 3-i in the procedures described in the second embodiment on the uplink also. To be specific, the control apparatus 1 obtains the communication path capacity "$C_i$" for the radio wave propagation characteristics "$H_{UE->R,i}*H_{BS->R,i}$" via the candidate for the relay station 3-i (similar to S111 in FIG. 11). The symbol "*" represents the multiplication of the matrix. The radio wave propagation characteristics "$H_{UE->R,i}*H_{BS->R,i}$" are the characteristics of the path leading to the base station 2 via the relay station 3-i from the terminal station 4, which characteristics are obtained by multiplying the radio wave propagation characteristic "$H_{UE->R,i}$" by the radio wave propagation characteristic "$H_{BS->R,i}$".

Next, the control apparatus 1 obtains a ratio "$z_i=C_i/(\tau_{BS->R,i}+\sigma_{BS->R,i})$" of the capacity of the communication path per time "$\tau_{BS->R,i}+\sigma_{BS->R,i}$" required for the relay via the candidate for the relay station 3-i (similarly to S112 in FIG. 11). The time "$\tau_{BS->R,i}+\sigma_{BS->R,i}$" required for the relay is a sum of the propagation delay quantity "$\tau_{BS->R,i}$" defined as the propagation time of the signal from the relay station 3-i to the base station 2, and a delay spread "$\sigma_{BS->R,i}$". The control apparatus 1 may simply select the relay stations 3-i (i=1, 2,...) in the sequence from the station exhibiting the larger of the ratios "$z_i$".

More specifically, the control apparatus 1 adds the relay stations 3-i from within the candidates for the relay stations 3-i in the sequence of the larger of the ratio "$z_i$", and calculates the delay quantity "$\Delta i^{UL}$" (refer to (Formula 4)) from the slot head of the relay wave to be relayed by the relay station 3-i concerned (similar to S113 in FIG. 11). As discussed in the first embodiment, the delay quantity "$\Delta i^{UL}$" from the slot head is the propagation delay time when the signal is propagated between the base station 2 and the terminal station 4.

Next, the control apparatus 1 determines whether the propagation delay time of the signal via the relay station 3-i satisfies the constraint condition of (Formula 5) (similar to S114 in FIG. 11). When the propagation delay time of the signal via the relay station 3-i satisfies the constraint condition of the (Formula 5), the control apparatus 1 sets the feasibility coefficient "ai=1" of the relay station 3-i and selects the relay station 3-i (similar to S115 in FIG. 11). Thus, the control apparatus 1 goes on selecting the candidates for the relay stations 3-i in the sequence from the larger of the ratio "zi", and finishes the processing just when the propagation delay time of the signal via the relay station 3-i does not satisfy the constraint condition of (Formula 5). In this manner, the control apparatus 1 sets "ai=1" for the selected candidates for the relay stations 3-i but sets "ai=0" for other candidates.

Accordingly, the control apparatus 1 calculates the ratio "zi" of the communication path capacity "Ci" to the propagation delay quantity "$\tau_{BS->R,i}+\sigma_{BS->R,i}$" of the second signal between each of the one or more relay stations 3-i and the base station 2 as the second communication station. Herein, the communication path capacity "Ci" is the communication path capacity between the first communication station (terminal station 4) and the second communication station (base station 2) via each of the one or more relay stations 3-i intervening in the communications. The control apparatus 1 selects the relay stations 3-i intervening in the communications between the first communication station and the second communication station by prioritizing the relay stations 3-i having the larger ratio "zi" among one or more relay stations 3-i. In other words, similarly to the second embodiment, the control apparatus 1 is enabled to select the relay stations 3-i capable of increasing the communication path capacity by taking into consideration the propagation delay quantity up to the base station 2 from the relay station 3-i in the fourth embodiment also. The control apparatus 1 prioritizes the path exhibiting the less propagation delay quantity up to the base station 2 from the relay station 3-i when the communication path capacities are equal to each other and is thereby enabled to select a much larger number of relay stations 3-i according to (Formula 5). The control apparatus 1 is enabled to properly select, based on the ratio "zi", such a combination of the relay stations 3-i as to maximize the capacity of the communication path between the base station 2 and the terminal station 4 with less quantity of calculations than by the third embodiment and within the range that satisfies the constraint condition.

<Combinations of First through Fourth Embodiments>

The first and second embodiments exemplify the process of determining such a combination of the relay stations 3-i as to enable the fast communications when the downlink communications are relayed by the relay station 3. The third and fourth embodiment exemplify the process of determining such a combination of the relay stations 3-i as to enable the fast communications when the uplink communications are relayed by the relay station 3. The communication systems 100A, 100B may be configured as the same communication system to execute these processes. Specifically, the communication system 100A, 100B may simply execute the process on the downlink in the first embodiment and the process on the uplink in the third embodiment. Further, the communication system 100A, 100B may simply execute the process on the downlink in the second embodiment and the process on the uplink in the fourth embodiment.

<Other Examples of Relay Station>

The first and second embodiments exemplify the relay station 3-i having single antenna (#0). However, in the communication systems 100A, 100B, the relay station 3-i may have the plurality of antennas. In this case, a number of elements of the radio wave propagation characteristics "$H_{BS->R,i}$, $H_{UE->R,i}$" increases by the number of the antennas of the relay station 3-i for the communication path capacity in (Formula 1A). In this instance, the control apparatus 1 may simply specify the delay quantity "$\Delta i$ ($\Delta i^{DL}$, $\Delta i^{UL}$)" from the slot head in each relay station 3-i, which delay quantity differs per relay station 3-i and per antenna of the relay station 3-i. The relay station 3 has the plurality of antennas, in which case the control apparatus 1 manages the radio wave propagation characteristics "$H_{BS->R,i}$", "$H_{UE->R,i}$", based not on the number of the relay stations but on the total number of the antennas possessed by the relay stations 3. The control apparatus 1 is thereby enabled to select the relay stations inclusively of the case that the candidates for any or all of the relay stations 3 have the plurality of antennas likewise as in the case that the candidate for the relay station 3 has only one antenna.

Note that the relay station 3-i may have an antenna dedicated to the reception of the control channel and capable receiving the control channel connected to the control circuit 32. The relay station 3-i includes the dedicated antenna operating as such and is thereby enabled to individually receive the channel for the non-regenerative relay and the control channel for the relay station. The control apparatus 1 is therefore enabled to carry out the control (on-off control) of the relay station 3-i even during the non-regenerative relay communications being performed by the relay station 3-i.

In the first through third embodiments, the control apparatus 1 is the apparatus on the core network to which the base station 2 is connected. Alternatively, the control apparatus 1 is the core network itself or the system contained in the core network. It does not, however, mean that the control apparatus 1 is limited to the apparatus configured as such on the core network. For example, the control apparatus 1 may also the apparatus included in the base station 2. For instance, the control apparatus 1 may be the apparatus performing the communications with the relay station 3 or the terminal station 4 via the wireless equipment 21 within the base station 2. In this case, the control apparatus 1 and the base station 2 may be configured as an integrated apparatus to simply execute the processes in FIGS. 7 through 10, or FIGS. 14 and 15. Accordingly, the processes illustrated as biserial sequences made by A1, B1, A2, B2, A3, and B3 or A13 and B13 may be configured into a uniserial sequence.

<Other Embodiments>

Each of the embodiments described above is merely one example, and the present disclosure may be carried out by being properly changed within the scope that does not depart from the gist thereof. The processes and means described in the present disclosure may be executed and implemented by non-restricted combinations as far as any technical contradictions are not caused.

The processes described as being executed by one apparatus may also be executed by a plurality of apparatuses by sharing the processes. None of problems may be caused alternatively when the processes described as being performed by the different apparatuses are executed by one apparatus. In a computer system, a method of how respective functions are attained by what type of hardware configuration (server configuration) may be flexibly varied.

The present disclosure is attainable also by supplying the computer with computer programs implementing the functions described in the embodiments and making one or more processors included in the computer read and execute the programs. The computer may be provided with the computer programs functioning as such by using a non-transitory computer readable storage medium connectible to a system bus of the computer, or through the network. The non-transitory computer readable storage medium includes, e.g., an arbitrary type of disc exemplified by: a magnetic disc (Floppy disc (registered trademark)); and optical discs (CD-ROM, DVD disc, and Blu-ray disc), a hard disc drive (HDD), a Read Only Memory (ROM); a Random Access Memory (RAM), an Erasable Programmable ROM (EPROM), an Electrically Erasable Programmable ROM (EEPROM), a magnetic card, a flash memory, or an arbitrary type of medium suited to storing electronic instructions, which medium is exemplified by an optical card.

**Claims**

1.    A controller (1) configured to control communications between a first communication station (2,2A,2B,4) and a second communication station (2,2A,2B,4) via any of one or more relay stations (3) or without via any of the one or more relay stations (3), the controller (1) configured to execute

determining (S86) a relay station (3) intervening in communications between the first communication station and the second communication station to maximize (S86) a communication path capacity between the first communication station (2,2A,2B,4) and the second communication station (2,2A,2B,4) under a predetermined constraint condition,
wherein the communication path capacity is calculated (S86) based on radio wave propagation characteristics between the first communication station (2,2A,2B,4) and each of the one or more relay stations (3), the radio wave propagation characteristics between each of the one or more relay stations (3) and the second communication station (2,2A,2B,4), and the radio wave propagation characteristics between the first communication station (2,2A,2B,4) and the second communication station (2,2A,2B,4).

2.    The controller (1) according to claim 1, wherein the controller (1) is configured to calculate (S86) the communication path capacity by varying a relay station or combinations of relay stations intervening in the communications between the first communication station and the second communication station in the one or more relay stations when determining the relay station.

3.    The controller (1) according to claim 1 or 2, wherein a modulation signal in the communications between the first communication station and the second communication station includes a guard interval between a symbol and another symbol, each of the symbol and another symbol corresponding to an interval of same bit information,

the controller is configured to set (S86) propagation delay time of a second signal so that the propagation delay time of a first signal reaching the second communication station from the first communication station without via any of the one or more relay stations takes a value different from a value of the propagation delay time of the second signal reaching the second communication station from the first communication station via any of the one or more relay stations and the propagation delay time of the second signal being set within such a range that the second signal does not delay equally to or longer than time of the guard interval, and
the relay station (3) intervening in the communications between the first communication station and the second communication station is configured to perform non-regenerative relay(S102) for the second signal, based on the set propagation delay time of the second signal.

4. The controller (1) according to claim 3, wherein the controller is configured to calculate (S112) a ratio of each communication path capacity between the first and the second communication stations, with each of the one or more relay stations intervening in the communications between the first and the second communication stations, to a propagation delay quantity of the second signal between each of the one or more relay stations and the second communication station, and to select (S113) the relay station intervening in the communications between the first communication station and the second communication station by prioritizing the relay station having the larger of the ratio from within the one or more relay stations.

5. The controller (1) according to claim 3 or 4, wherein the controller (1) is configured to determine (S86) in a sequence, a certain number of relay stations intervening in the communications based on the following processing to:

   integrate (S86) propagation delay quantities of the second signals between the one or more relay stations and the second communication station in the sequence of the determined relay stations intervening in the communications;
   set (S86) the propagation delay time of the second signal via each of the certain number of relay stations intervening in the communications, based on an integrated value of the propagation delay quantities integrated up to the relay station determined immediately before each of the certain number of relay stations intervening in the communications; and
   determine (S86) in the sequence, from within the one or more relay stations, the certain number of relay stations intervening in the communications between the first communication station and the second communication station, the certain number being set in such a range that the second signal is not delayed equally to or longer than the guard interval time, based on the set propagation delay time.

6. The controller according to any one of claims 1 through 5, wherein on a downlink, the first communication station is a base station (2,2A,2B), and the second communication station is a terminal station (4),

   on an uplink, the first communication station is the terminal station (4), and the second communication station is the base station (2,2A,2B), and
   the controller (1) is configured to:
   obtain (S86), per wireless frame via the base station, the radio wave propagation characteristics measured based on a reference signal transmitted from the base station and received by the terminal station without via any of the one or more relay stations;
   obtain (S86), via the base station, the radio wave propagation characteristics measured based on the reference signals transmitted from the base station and received by the one or more relay stations;
   obtain (S86), via the base station, the radio wave propagation characteristics measured based on the reference signals transmitted from the terminal station and received by the one or more relay stations; and
   determine (S86) the relay station intervening in the communications between the base station and the terminal station.

7. The controller according to claim 6, wherein the controller (1) is included in the base station (2,2A).

8. A communication system (100A, 100B) comprising:

   a first communication station (2,2A,2B,4);
   one or more relay stations (3) to be communicable with the first communication station (2,2A,2B,4);
   a second communication station (2,2A,2B,4) to be communicable with the first communication station (2,2A,2B,4) via any of the one or more relay stations (3) or without via any of the one or more relay stations (3); and
   a controller (1) according to any one of claims 1 through 7.

9. A communication method to control communications between a first communication station (2,2A,2B,4) and a second communication station (2,2A,2B,4) via any of one or more relay stations (3) or without via any of the one or more relay stations (3), comprising

   determining (S86) a relay station (3) intervening in communications between the first communication station (2,2A,2B,4) and the second communication station (2,2A,2B,4) to maximize (S86) a communication path capacity between the first communication station (2,2A,2B,4) and the second communication station (2,2A,2B,4) under a predetermined constraint condition,
wherein the communication path capacity is calculated (S86) based on radio wave propagation characteristics between the first communication station (2,2A,2B,4) and each of the one or more relay stations (3), the radio wave propagation characteristics between each of the one or more relay stations (3) and the second communication station (2,2A,2B,4), and the radio wave propagation characteristics between the first communication station (2,2A,2B,4) and the second communication station (2,2A,2B,4).

10. The control method according to claim 9, further comprising calculating (S86) the communication path capacity by varying a relay station or combinations of relay stations intervening in the communications between the first communication station and the second communication station in the one or more relay stations when determining the relay station.

11. The control method according to claim 9 or 10, wherein a modulation signal in the communications between the first communication station and the second communication station include a guard interval between a symbol and another symbol, each of the symbol and another symbol corresponding to an interval of same bit information, further comprising:

setting (S86) propagation delay time of a second signal so that the propagation delay time of a first signal reaching the second communication station from the first communication station without via any of the one or more relay stations takes a value different from a value of the propagation delay time of the second signal reaching the second communication station from the first communication station via any of the one or more relay stations and the propagation delay time of the second signal being set within such a range that the second signal does not delay equally to or longer than time of the guard interval; and
causing the relay station (3) intervening in the communications between the first communication station and the second communication station to perform non-regenerative relay (S102) for the second signal, based on the set propagation delay time of the second signal.

12. The control method according to claim 11, further comprising:

calculating (S112) a ratio of each communication path capacity between the first and the second communication stations, with each of the one or more relay stations intervening in the communications between the first and the second communication stations, to a propagation delay quantity of the second signal between each of the one or more relay stations and the second communication station; and
selecting (S113) the relay station intervening in the communications between the first communication station and the second communication station by prioritizing the relay station having the larger of the ratio from within the one or more relay stations.

13. The control method according to claim 11 or 12, further determining (S86) in a sequence, a certain number of relay stations intervening in the communications based on the following processing of:

integrating (S86) the propagation delay quantities of the second signals between the one or more relay stations and the second communication station in the sequence of the determined relay stations intervening in the communications;
setting (S86) the propagation delay time of the second signal via each of the certain number of relay stations intervening in the communications, based on an integrated value of the propagation delay quantities integrated up to the relay station determined immediately before each of the certain number of relay stations intervening in the communications; and
determining (S86) in the sequence, from within the one or more relay stations, the certain number of relay station intervening in the communications between the first communication station and the second communication station, the certain number being set in such a range that the second signal is not delayed equally to or longer than the guard interval time, based on the set propagation delay time.

14. The control method according to any one of claims 9 through 13, wherein on a downlink, the first communication station is a base station (2,2A,2B) and the second communication station is a terminal station (4), and on an uplink, the first communication station is the terminal station (4) and the second communication station is the base station (2,2A,2B), the control method comprising:

obtaining (S86), per wireless frame via the base station, the radio wave propagation characteristics measured based on a reference signal transmitted from the base station and received by the terminal station without via any of the one or more relay stations;

obtaining (S86), via the base station, the radio wave propagation characteristics measured based on the reference signals transmitted from the base station and received by the one or more relay stations;

obtaining (S86), via the base station, the radio wave propagation characteristics measured based on the reference signals transmitted from the terminal station and received by the one or more relay stations; and

determining (S86) the relay station intervening in the communications between the base station and the terminal station.

FIG.1

FIG.2

## *FIG.3*

TRANSMISSION ↑ #0 ↓ RECEPTION

TRANSMITTER — 311

314

RECEIVER — 312

31

SELF-INTERFERENCE

BASEBAND CIRCUIT (FIR FILTER) — 313

WIRELESS EQUIPMENT

3

CONTROL CIRCUIT — 32

## *FIG.4*

TND,i     T3     T2     T1

D     D     D     D

ML

$w_{i,N_{D,i}}$     $w_{i,N_{D,i}-1}$     $w_{i,3}$     $w_{i,2}$     $w_{i,1}$

AD

## FIG.5

1

~11
CPU

~12
MAIN STORAGE DEVICE

~13
EXTERNAL STORAGE DEVICE

~14
OUTPUT DEVICE

~15
OPERATION DEVICE

~16
COMMUNICATION DEVICE

## FIG.6

$\max(\tau_{BS \to UE} + \sigma_{BS \to UE},$
$\tau_{BS \to R,i} + \sigma_{BS \to R,i} + \tau_{R,i})$

$\tau_1 + \sigma_1$  $\tau_2 + \sigma_2$  $\tau_3 + \sigma_3$  $\tau_4 + \sigma_4$

$\sigma_{BS \to UE}$

$\tau_{BS \to UE}$

$\delta$

$T_{CP}$

TIME

SLOT HEAD

FIG.7

*FIG.8*

A1　　　　　　B1　　　　　　C1

S81

MEASURE COUPLING $H_{SI,i}$ IN SELF-INTERFERENCE

S82

DETERMINE WEIGHT $w_i$ OF FIR FILTER

S83

CALCULATE PROCESS DELAY $\tau_{R,i} = N_{D,i} * \tau_D$
FROM NUMBER-OF-TAPS $N_{D,i}$ AND DELAY
TIME $\tau_D$ PER TAP

S84

SEND $H_{BS \to R,i}$、$H_{UE \to R,i}$、$\tau_{R,i}$ TO
CONTROL APPARATUS

S85

SEND

S86

OBTAIN SUCH PROPAGATION PATH
$H_{BS \to R \to UE}$ AS TO MAXIMIZE
CAPACITY OF COMMUNICATION
PATH FROM 、$H_{BS \to UE}$、
$H_{BS \to R,i}$、$H_{UE \to R,i}$ UNDER
CONDITION NOT TO OVERLAP NON-
REGENERATIVE RELAY WAVES

A2　　　　　　B2　　　　　　C2

*FIG.9*

EP 4 333 323 A1

FIG.10

EP 4 333 323 A1

*FIG.11*

$$\text{DETERMINE PROPAGATION PATH}$$

S111

OBTAIN COMMUNICATION PATH CAPACITY $C_i$ FOR MATRIX $H_{\mathrm{BS} \to \mathrm{R},i} * H_{\mathrm{UE} \to \mathrm{R},i}$ OF COMMUNICATION PATH VIA CANDIDATE FOR RELAY STATION $\# i$

S112

OBTAIN RATIO $z_i = \dfrac{C_i}{\tau_i + \sigma_i}$ OF COMMUNICATION PATH CAPACITY PER TIME $\tau_i + \sigma_i$

SELECT ONE RELAY STATION $(\# i)$ FROM STATIONS HAVING LARGE $z_i$ AND CALCULATE DELAY $\Delta_i$ OF STATION $(\# i)$

S113

S114

CONSTRAINT CONDITION?

SATISFIED

NOT SATISFIED

S115

SET COEFFICIENT ai=1 OF STATION $(\# i)$

END

FIG.12

EP 4 333 323 A1

*FIG.13*

$$\tau_{BS \to R,3} + \sigma_{BS \to R,3}$$

$$\tau_{BS \to R,2} + \sigma_{BS \to R,2}$$

$$\tau_{BS \to R,1} + \sigma_{BS \to R,1}$$

$$\tau_{BS \to R,0} + \sigma_{BS \to R,0}$$

$$\max(\tau_{BS \to UE} + \sigma_{BS \to UE}, \ \tau_{UE \to R,i} + \sigma_{UE \to R,i} + \tau_{R,i})$$

$\sigma_{BS \to UE}$

$\tau_{BS \to UE}$

$\delta$

$T_{CP}$

TIME

SLOT HEAD

## FIG.14

S91A

DETERMINE COMBINATION
(MCS) OF MODULATION
METHODS-CODING RATES FOR
PROPAGATION PATH
$H_{UE \to R \to BS}$

S92
NOTIFY MCS TO UE

S93
NOTIFY

S94
NOTIFY RELAY
PARAMETER TO
RELAY STATION

S95
NOTIFY

S98
SET MCS

S96
ai=1 ?          NO

YES          S97A
SET DELAY UNIT OF FIR FILTER
TO GET DELAY QUANTITY $\Delta_i^{UL}$

A13          B13          C13          C14          D12

EP 4 333 323 A1

## FIG.15

Europäisches
Patentamt

European
Patent Office

Office européen
des brevets

# EUROPEAN SEARCH REPORT

Application Number

EP 23 19 0653

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/315133 A1 (WANG YUE [GB] ET AL) 28 November 2013 (2013-11-28) | 1,2,7-10 | INV. H04B7/155 H04B7/26 |
| Y | * abstract; figures 1, 5, 7, 8 * * paragraphs [0023] - [0027], [0038], [0044] * | 3-6, 11-14 | |
| X | US 2009/296626 A1 (HOTTINEN ARI [FI] ET AL) 3 December 2009 (2009-12-03) | 1,2,7-10 | |
| Y | * abstract; figure 1 * * paragraph [0051] * | 3-6, 11-14 | |
| X | US 2011/255462 A1 (JO JUN HO [KR] ET AL) 20 October 2011 (2011-10-20) | 1,2,7-10 | |
| Y | * paragraphs [0036] - [0042]; figure 2 * | 3-6, 11-14 | |
| Y | WO 2021/186609 A1 (NIPPON TELEGRAPH & TELEPHONE CORP) 23 September 2021 (2021-09-23) * abstract * & US 2023/114692 A1 (IWABUCHI MASASHI [JP] ET AL) 13 April 2023 (2023-04-13) * abstract * * paragraphs [0009] - [0010] * | 3-6, 11-14 | TECHNICAL FIELDS SEARCHED (IPC) H04B H04W |
| A | US 2013/010601 A1 (SENARATH NIMAL GAMINI [CA] ET AL) 10 January 2013 (2013-01-10) * abstract; figures 1, 6 * | 4,12 | |

The present search report has been drawn up for all claims

| Place of search | Date of completion of the search | Examiner |
|---|---|---|
| Munich | 18 January 2024 | Staeger, Rainer |

EPO FORM 1503 03.82 (P04C01)

## ANNEX TO THE EUROPEAN SEARCH REPORT
## ON EUROPEAN PATENT APPLICATION NO.

EP 23 19 0653

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2024

| Patent document cited in search report | | Publication date | Patent family member(s) | | Publication date |
|---|---|---|---|---|---|
| US 2013315133 | A1 | 28-11-2013 | GB | 2501932 A | 13-11-2013 |
| | | | JP | 5579303 B2 | 27-08-2014 |
| | | | JP | 2013255223 A | 19-12-2013 |
| | | | US | 2013315133 A1 | 28-11-2013 |
| US 2009296626 | A1 | 03-12-2009 | KR | 20090124978 A | 03-12-2009 |
| | | | US | 2009296626 A1 | 03-12-2009 |
| US 2011255462 | A1 | 20-10-2011 | EP | 2373096 A2 | 05-10-2011 |
| | | | KR | 20100074802 A | 02-07-2010 |
| | | | US | 2011255462 A1 | 20-10-2011 |
| | | | WO | 2010074470 A2 | 01-07-2010 |
| WO 2021186609 | A1 | 23-09-2021 | JP | 7355222 B2 | 03-10-2023 |
| | | | JP | WO2021186609 A1 | 23-09-2021 |
| | | | US | 2023114692 A1 | 13-04-2023 |
| | | | WO | 2021186609 A1 | 23-09-2021 |
| US 2013010601 | A1 | 10-01-2013 | CN | 102017714 A | 13-04-2011 |
| | | | EP | 2245885 A1 | 03-11-2010 |
| | | | EP | 2571317 A1 | 20-03-2013 |
| | | | JP | 5230753 B2 | 10-07-2013 |
| | | | JP | 2011514031 A | 28-04-2011 |
| | | | KR | 20100103857 A | 28-09-2010 |
| | | | US | 2009185492 A1 | 23-07-2009 |
| | | | US | 2012155376 A1 | 21-06-2012 |
| | | | US | 2013010601 A1 | 10-01-2013 |
| | | | WO | 2009092155 A1 | 30-07-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. CHEN ; A. B. GERSHMAN ; S. SHAHBAZPANA-HI.** Filter-and-Forward Distributed Beamforming in Relay Networks with Frequency Selective Fading. *IEEE Trans. On Signal Processing, (U.S.A.),* March 2010, vol. 58 (3

- **NOGUCHI, HAYASHI ; KANEKO, SAKAI.** A Single Frequency Full-Duplex Radio Relay Station for Frequency Domain Equalization Systems. *Technical Report of the Institute of Electronics, Information and Communication Engineers,* January 2012, vol. SIP2011-109